# EUROPÄISCHE PATENTSCHRIFT

(11) **EP 4 278 943 B1**
(45) Veröffentlichungstag und Bekanntmachung des Hinweises auf die Patenterteilung: **15.04.2026**
(21) Anmeldenummer: 23173358.5
(22) Anmeldetag: 15.05.2023
(51) Int. Cl.: A47L 15/24, A47L 15/00

(54) **TRANSPORTVORRICHTUNG FÜR EINE SPÜLMASCHINE SOWIE SPÜLMASCHINE MIT EINER SOLCHEN TRANSPORTVORRICHTUNG**
TRANSPORT DEVICE FOR A DISHWASHER AND DISHWASHER WITH SUCH A TRANSPORT DEVICE
DISPOSITIF DE TRANSPORT POUR UN LAVE-VAISSELLE ET LAVE-VAISSELLE DOTÉ D'UN TEL DISPOSITIF DE TRANSPORT

(30) Priorität: 18.05.2022 DE 102022112518
(43) Veröffentlichungstag der Anmeldung: 22.11.2023
(73) Patentinhaber: Illinois Tool Works Inc., Glenview, IL 60025 (US)
(72) Erfinder: DISCH, Harald, Glenview, Illinois 60025 (US); SCHREMPP, Martin, Glenview, Illinois 60025 (US); FRANZ, Benjamin, Glenview, Illinois 60025 (US); BRODOWSKI, Björn, Glenview, Illinois 60025 (US); BOLDT, Adrian, Glenview, Illinois 60025 (US); LITTERST, Norbert, Glenview, Illinois 60025 (US); BRAUN, Harry, Glenview, Illinois 60025 (US); ZOLLER, Frank, Glenview, Illinois 60025 (US)
(74) Vertreter: Meissner Bolte Partnerschaft mbB

(56) Entgegenhaltungen:
- EP-A1- 0 600 125
- CN-A- 109 247 888
- KR-A- 20040 087 763

## Beschreibung

Die Erfindung betrifft allgemein das Fachgebiet des gewerblichen Spülens.

Im Einzelnen betrifft die Erfindung eine spezielle Spülmaschine, die insbesondere für den Einsatz in einem Coffeeshop und/oder in einem Schnellrestaurant zum Reinigen von Spülgut optimiert ist. Des Weiteren betrifft die Erfindung eine speziell für den Einsatz in einem Coffeeshop und/oder in einem Schnellrestaurant konzipierte Transportvorrichtung für eine solche Spülmaschine.

Die erfindungsgemäße Spülmaschine ist als Transportspülmaschine ausgeführt und weist eine Transportvorrichtung auf, um das Spülgut von einem der Spülmaschine zugeordneten Eingabe- oder Einstellbereich zu einem Behandlungsbereich der Spülmaschine und von dort zu einem Ausgabe- oder Entnahmebereich der Spülmaschine zu transportieren. Der der Spülmaschine zugeordnete Eingabe- oder Einstellbereich stellt dabei den schmutzseitigen Bereich dar, während der Ausgabe- oder Entnahmebereich der Spülmaschine den reinseitigen Bereich der Maschine darstellt.

Transportspülmaschinen dieser Art finden im gewerblichen Bereich Anwendung. Im Gegensatz zu Haushaltsspülmaschinen, bei welchen das zu reinigende Spülgut während der Reinigung ortsfest in der Spülmaschine verbleibt, findet hingegen bei Transportspülmaschinen ein Transport des Spülguts durch verschiedene Behandlungszonen der Maschine statt.

Dadurch, dass bei Transportspülmaschinen ein Transport des Spülguts durch verschiedene Behandlungszonen (insbesondere Waschzonen und Klarspülzonen) der Maschine stattfindet, ist - im Unterschied zu den Batch-Prozessen von stationären Programmautomaten, wie etwa Haushaltsspülmaschinen oder Untertischmaschinen - ein kontinuierlicher Betrieb möglich. Der Nachteil von Transportspülmaschinen ist jedoch in dem relativ großen Platzbedarf im Aufstellraum zu sehen.

Allerdings besteht zunehmender Bedarf darin, die Vorteile einer Transportspülmaschine bei Anwendungen zu nutzen, bei denen nur eine geringe Aufstellfläche zur Verfügung steht.

So stehen heutzutage in Hotels, Betriebskantinen, öffentlichen Gebäuden, Krankenhäusern, Schulen und Raststätten fast immer Heißgetränkeautomaten, insbesondere Kaffeeautomaten unterschiedlicher Modelle und Größen zur Selbstbedienung bereit. In der Regel sind diese Heißgetränkeautomaten ausgebildet, um Trinkbehälter (Trinkbecher) mit einem ausgewählten Heißgetränk zu befüllen, wobei allerdings bei Automatenaufstellungen in Betrieben oder öffentlichen Gebäuden auch Kunststoffbecher zum Einsatz kommen.

Gleiches gilt für Coffeeshops oder Schnellrestaurants, bei denen es üblich ist, eine von dem Kunden ausgewählte Kaffeespezialität dem Kunden in einem so genannten "Coffee-To-Go"-Becher zu übergeben. Aufgrund der enormen Mengen an Plastikmüll, die tagtäglich durch Einweggeschirr anfällt, besteht ein Bestreben danach, die Menge des insbesondere bei Coffeeshops oder Schnellrestaurants anfallenden Einweggeschirrs zu reduzieren.

Ein Ansatz, die Ökobilanz bei insbesondere Coffeeshops oder Schnellrestaurants zu verbessern, besteht darin, Einweggeschirr, wie beispielsweise "Coffee-To-Go"-Einwegbecher zu verwenden, welche recycelbar sein. In diesem Zusammenhang ist beispielsweise Einweggeschirr aus Celluloseacetat oder aus so genanntem oxo-abbaubarem Kunststoff bekannt.

Das Problem bei derartigem Einweggeschirr ist jedoch darin zu sehen, dass sich der oxo-abbaubare Kunststoff nur unter bestimmten definierten Bedingungen zersetzen kann, wobei diese bestimmten Bedingungen in der Regel beim Recyceln nicht gegeben sind. Als Folge hiervon zerfällt das Material des Einweggeschirrs in Mikroplastik und kann die Umwelt und Gesundheit weiterhin belasten.

Darüber hinaus ist die Herstellung von Einweggeschirr aus oxo-abbaubarem Kunststoff relativ aufwendig und belastet von daher auch so die Ökobilanz.

Auf Grundlage dieser Problemstellung liegt somit die Aufgabe zu Grunde, eine Lösung insbesondere für Coffeeshops oder Schnellrestaurants anzugeben, mit welcher deren Ökobilanz deutlich verbessert werden kann.

Herkömmliche, für insbesondere große Spülküchen konzipierte Transportspülmaschinen eignen sich - wenn überhaupt - nur bedingt für den geplanten Einsatz in einem Coffeeshop bzw. in einem Schnellrestaurant. Dies liegt zum einen daran, dass für große Spülküchen konzipierte Transportspülmaschinen einen relativ großen Aufstellplatz benötigen, der in der Regel nicht in einem Coffeeshop oder in einem Schnellrestaurant zur Verfügung steht, insbesondere wenn die Spülmaschine durch die Kunden des Coffeeshops bzw. des Schnellrestaurants beladbar sein soll.

Abgesehen hiervon kommen bei herkömmlichen für Spülküchen konzipierte Transportspülmaschinen Transportvorrichtungen zum Einsatz, die sich ebenfalls nicht wirklich für den Einsatz in einem Coffeeshop oder in einem Schnellrestaurant eignen. Bei herkömmlichen für Spülküchen konzipierten Transportspülmaschinen kommt als Transportvorrichtung in der Regel ein relativ breites Förderband zum Einsatz, in welchem von dem Spülpersonal das zu reinigende Spülgut in entsprechend vorgesehenen Fächern eingesetzt wird. Das Spülpersonal achtet in der Regel dabei auf die korrekte Ausrichtung und sichere Positionierung der Spülgutteile.

Dies jedoch kann nicht von Kunden eines Coffeeshops oder Schnellrestaurants verlangt werden. Es besteht somit auch ein Bedarf nach einer optimierten Transportvorrichtung, in welcher die zu reinigenden Spülgutteile in einer selbsterklärenden Weise aufnehmbar sind, wobei gleichzeitig eine sichere Fixierung der aufgenommenen Spülgutteile einerseits und eine korrekte und optimale Ausrichtung der Spülgutteile andererseits sichergestellt ist.

Die Druckschrift CN 109247888 A betrifft eine Transportvorrichtung für eine Spülmaschine gemäß dem Oberbegriff des unabhängigen Patentanspruchs 1.

Die Druckschrift EP 0 600 125 A1 betrifft eine Spülmaschine zum Reinigen von Trinkgläsern.

Die Druckschrift KR 2004 0087763 A betrifft eine weitere Spülmaschine zum Reinigen von Trinkgläsern.

Im Hinblick auf die Transportvorrichtung wird die der Erfindung zu Grunde liegende Aufgabe durch den Gegenstand des unabhängigen Patentanspruchs 1 gelöst, wobei vorteilhafte Weiterbildungen der erfindungsgemäßen Transportvorrichtung in den abhängigen Ansprüchen 2 bis 6, 8 und 9 genannt sind.

Im Hinblick auf die Spülmaschine wird die der Erfindung zu Grunde liegende Aufgabe durch den Gegenstand des nebengeordneten Patentanspruchs 12 gelöst.

Demgemäß betrifft die Erfindung insbesondere eine Transportvorrichtung für eine Spülmaschine, insbesondere für eine Spülmaschine eines Coffeeshops und/oder eines Schnellrestaurants zum Transportieren von zu reinigenden Spülgutteilen, insbesondere Trinkgefäßen, durch mindestens eine Behandlungszone der Spülmaschine und/oder zum Zuführen von zu reinigenden Spülgutteilen, insbesondere Trinkgefäßen, zu der Spülmaschine. Die erfindungsgemäße Transportvorrichtung weist ein umlaufendes Fördersystem auf, welches insbesondere in Gestalt einer umlaufenden Transportkette oder in Gestalt eines umlaufenden Förderbands ausgeführt ist.

Erfindungsgemäß ist vorgesehen, dass die Transportvorrichtung eine Vielzahl von Halteelemente aufweist, die mit dem umlaufenden Fördersystem verbunden und ausgebildet sind, lösbar zu reinigende Spülgutteile, insbesondere Trinkgefäße, insbesondere formschlüssig und vorzugsweise zumindest bereichs- oder teilweise formschlüssig aufzunehmen und/oder lösbar zu halten. Ferner weist die Transportvorrichtung ein Abstützsystem auf, welches dazu dient, zumindest teil- und/oder bereichsweise die von den Halteelementen der Transportvorrichtung aufgenommenen Spülgutteile, insbesondere Trinkgefäße, abzustützen.

Im Unterschied zu herkömmlichen Transportbändern, die bei Transportspülmaschinen für Spülküchen zum Einsatz kommen, weist die erfindungsgemäße Transportvorrichtung wesentliche Vorteile auf, die es gestatten, dass die Transportvorrichtung insbesondere für Spülmaschinen eines Coffeeshops und/oder eines Schnellrestaurants geeignet ist.

Indem eine Vielzahl von Halteelemente vorgesehen ist, die jeweils ausgebildet sind, lösbar die zu reinigenden Spülgutteile insbesondere formschlüssig und vorzugsweise zumindest bereichs- oder teilweise formschlüssig aufzunehmen und lösbar zu halten, ist die Transportvorrichtung auch von nicht zum Spülpersonal gehörenden Personen optimal mit zu reinigenden Spülgutteilen bestückbar. Die Halteelemente, die dazu dienen, die zu reinigenden Spülgutteile insbesondere formschlüssig aufzunehmen, erlauben dabei eine intuitive Belegung der Transportvorrichtung mit Spülgutteilen, also eine auch für ungeschultes Personal selbsterklärende Art und Weise, wie die Transportvorrichtung mit Spülgutteilen zu bestücken ist. Beispielsweise ist es in diesem Zusammenhang denkbar, dass die Halteelemente derart konzipiert sind, dass diese nur die Aufnahme von einer bestimmten Spülgutart, wie beispielsweise Trinkgefäßen, erlaubt. Alternativ und zusätzlich hierzu ist es denkbar, dass die Halteelemente auch intuitiv die Orientierung der zu der Spülgutart gehörenden Spülgutteile dem Benutzer vorgibt.

Es ist somit sichergestellt, dass mit Hilfe der Halteelemente die zu reinigenden Spülgutteile, insbesondere Trinkgefäße, in der vorgegebenen Position und insbesondere auch mit der vorgegebenen Ausrichtung eingestellt werden, was ein optimales Wasch-/Spülergebnis garantiert.

Andererseits sind die Halteelemente so ausgebildet, dass die aufgenommenen Spülgutteile, insbesondere Trinkgefäße, von den Halteelementen lösbar gehalten werden. Dadurch ist sichergestellt, dass die Positionierung und Ausrichtung der Spülgutteile bei deren Transport zu der oder durch die Spülmaschine nicht verändert wird.

Dies wird dadurch ferner unterstützt, dass die erfindungsgemäße Transportvorrichtung zusätzlich zu den Halteelementen ein Abstützsystem aufweist, um die von den Halteelementen aufgenommenen Spülgutteile, insbesondere Trinkgefäße, in deren von den Halteelementen aufgenommenen Zustand abzustützen.

Bei der erfindungsgemäßen Transportvorrichtung ist vorgesehen, dass die Halteelemente vorzugsweise jeweils als im Hinblick auf die Förderrichtung des umlaufenden Fördersystems radial von dem Fördersystem abstehende und zumindest bereichs- oder abschnittsweise horizontal mit dem umlaufenden Fördersystem transportierte oder transportierbare Mitnehmer ausgebildet sind.

Jeder Mitnehmer weist einen entsprechenden Aufnahmebereich auf, in welchem ein Spülgutteil, insbesondere Trinkgefäß, zumindest teil- oder bereichsweise aufnehmbar ist. In diesem Zusammenhang ist vorgesehen, dass der Aufnahmebereich eines jeden Mitnehmers taschenförmig und vorzugsweise sterntaschenförmig ausgeführt ist. Dabei kann der taschenförmige und vorzugsweise insbesondere sterntaschenförmige Aufnahmebereich zumindest bereichs- oder teilweise an der Außenkontur des zu reinigenden Spülgutteils angepasst sein.

Dies erlaubt es weiterhin, dass die Halteelemente eine Bestückung mit Spülgutteilen insbesondere einer vorab festgelegten oder festlegbaren Spülgutart nach dem Poka-Yoke-Prinzip erlaubt. Die Aufnahmebereiche der Halteelemente sind beispielsweise so ausgelegt, dass Spülgutteile insbesondere der vorab festgelegten oder festlegbaren Spülgutart nur in einer vorab festgelegten Ausrichtung und/oder Orientierung aufnehmbar sind.

Gemäß Realisierungen der zuletzt genannten Ausführungsform sind die insbesondere taschenförmigen und vorzugsweise sterntaschenförmigen Aufnahmebereiche durch mindestens einen kreissegmentförmigen Abschnitt eines jeden als Mitnehmer ausgeführten Halteelements gebildet.

Die Halteelemente sind jeweils als im Hinblick auf die Förderrichtung des umlaufenden Fördersystems radial von dem Fördersystem abstehende und zumindest bereichs- oder abschnittsweise horizontal mit dem umlaufenden Fördersystem transportierte oder transportierbare Mitnehmer ausgebildet, wobei jedoch zwischen zwei benachbarten Mitnehmern der Aufnahmebereich zum zumindest teil- oder bereichsweisen Aufnehmen des zu reinigenden Spülgutteils, insbesondere des zu reinigenden Trinkgefäßes, ausgebildet ist oder ausbildbar ist.

Der Aufnahmebereich, welcher zwischen zwei benachbarten Mitnehmern gebildet ist, ist taschenförmig und noch bevorzugter sterntaschenförmig ausgeführt.

Dabei ist es gemäß Realisierungen dieser Ausführungsform denkbar, dass der taschenförmige und vorzugsweise sterntaschenförmige Aufnahmebereich zwischen zwei benachbarten Mitnehmern vorzugsweise durch einen ersten kreissegmentförmigen Abschnitt eines ersten Mitnehmers der beiden benachbarten Mitnehmer und durch einen zweiten kreissegmentförmigen Abschnitt eines zweiten Mitnehmers der beiden benachbarten Mitnehmer gebildet ist.

Losgelöst davon, wie die Halteelemente im Einzelnen ausgeführt sind, ist gemäß Weiterbildungen der zuletzt genannten Ausführungsformen vorgesehen, dass der taschenförmige und vorzugsweise sterntaschenförmige Aufnahmebereich - zumindest teil- oder bereichsweise - derart flexibel ausgeführt ist, dass in dem taschenförmigen und vorzugsweise sterntaschenförmigen Aufnahmebereich Spülgutteile und insbesondere Trinkgefäße unterschiedlicher Größe und insbesondere mit unterschiedlichem Durchmesser und/oder Spülgutteile und insbesondere Trinkgefäße mit unterschiedlicher Außengeometrie zumindest teil-oder bereichsweise aufnehmbar sind.

Die flexible Ausführung des Aufnahmebereichs der Halteelemente erlaubt somit, dass die Transportvorrichtung für unterschiedliche Spülgutteile insbesondere der gleichen Spülgutart, wie beispielsweise für unterschiedlich große Trinkgefäße, geeignet ist. Gleichzeitig ist durch die flexible Ausgestaltung des Aufnahmebereichs sichergestellt, dass die von den Halteelementen aufgenommenen Spülgutteile sicher zu der Spülmaschine und insbesondere durch die Spülmaschine transportierbar sind, ohne dabei die beim Beladebereich der Spülmaschine gewählte Orientierung und/oder Ausrichtung der Spülgutteile zu verändern.

Die flexible Ausführung des Aufnahmebereichs kann auf verschiedene Weisen realisiert werden. So ist es beispielsweise denkbar, dass zumindest bereichs- oder abschnittsweise der Aufnahmebereich aus einem elastisch flexiblen Material gebildet ist.

Andererseits ist es alternativ oder zusätzlich hierzu denkbar, dass der Aufnahmebereich aus zwei insbesondere kreissegmentförmigen Abschnitten gebildet ist, die - zumindest über einen gewissen Wegbereich - relativ zueinander bewegbar sind, wobei mit Hilfe eines Vorspannelements, beispielsweise einer Feder, die beiden insbesondere kreissegmentförmigen Abschnitte in eine aufeinander zugerichtete Stellung vorgespannt sein sollten.

Alternativ oder zusätzlich zu den zuvor genannten Ausführungsformen der Halteelemente ist gemäß einem Aspekt der Erfindung vorgesehen, dass die Halteelemente vorzugsweise jeweils als im Hinblick auf die Förderrichtung des umlaufenden Fördersystems radial von dem Fördersystem abstehende und zumindest bereichs- oder abschnittsweise vertikal mit dem umlaufenden Fördersystem transportierte Aufnahmefinger oder Aufnahmestifte ausgebildet sind. Jeder Aufnahmefinger oder Aufnahmestift ist vorzugsweise ausgebildet, ein kopfüber ausgerichtetes Trinkgefäß zumindest teil- oder bereichsweise aufzunehmen.

Das Vorsehen von derartigen Aufnahmefingern oder Aufnahmestifte stellt in einer leicht zu realisierenden aber dennoch effektiven Weise sicher, dass beispielsweise ein Trinkgefäß nur in der richtigen Ausrichtung, also im kopfüber ausgerichteten Zustand, mit den Halteelementen der Transportvorrichtung verbunden werden kann.

Wie bereits ausgeführt, zeichnet sich die erfindungsgemäße Transportvorrichtung neben den Halteelementen auch durch das Abstützsystem aus, welches dazu dient, zumindest teil- und/oder bereichsweise die von den Halteelementen aufgenommenen Spülgutteile, insbesondere Trinkgefäße, abzustützen. Dadurch ist in Kombination mit den Halteelementen sichergestellt, dass auch bei der Behandlung der Spülgutteile in mindestens einer Behandlungszone der Spülmaschine die Positionierung und relative Ausrichtung der Spülgutteile nicht verändert wird.

Bei der erfindungsgemäßen Transportvorrichtung ist im Hinblick auf das Abstützsystem vorgesehen, dass dieses eine sich zumindest bereichsweise parallel zum Fördersystem erstreckende Führung und/oder mindestens eine zumindest bereichsweise parallel zum Fördersystem verlaufende und insbesondere mit dem Fördersystem mitlaufende Führung aufweist.

Durch das Vorsehen einer solchen Führung, die entweder statisch angeordnet oder mit dem Fördersystem mitläuft, ist in einer leicht zu realisierenden aber dennoch effektiven Weise möglich, dass die von den Halteelementen der Transportvorrichtung aufgenommenen Spülgutteile, insbesondere Trinkgefäße, gemäß einem vorgegebenen Ereignisablauf zu der Spülmaschine bzw. durch die Spülmaschine transportierbar sind.

Erfindungsgemäß ist vorgesehen, dass die Führung unterhalb der Halteelemente verläuft und zum vertikalen Abstützen der von den Halteelementen aufgenommenen oder gehaltenen Spülgutteile, insbesondere Trinkgefäße, dient.

In diesem Zusammenhang ist vorgesehen, dass die Führung wenigstens eine sich zumindest bereichsweise parallel zum Fördersystem erstreckende Führungsschiene oder wenigstens ein sich zumindest bereichsweise parallel zum Fördersystem erstreckendes Führungsband aufweist. Alternativ oder zusätzlich hierzu ist es denkbar, dass die mindestens eine Führung wenigstens eine zumindest bereichsweise parallel zum Fördersystem verlaufende und insbesondere mit dem Fördersystem mitlaufende Führungsschiene oder mindestens ein zumindest bereichsweise parallel zum Fördersystem verlaufendes und insbesondere mit dem Fördersystem mitlaufendes Führungsband aufweist.

Indem als Führung eine Führungsschiene oder ein Führungsband verwendet wird, ist es nach wie vor möglich, ohne Einschränkungen die Spülgutteile von unten mit Wasch- oder Spülflüssigkeit zu besprühen, ohne dass die Führung zumindest nennenswerte Sprühschatten auf die zu behandelnden Spülgutteile wirft.

Bei der erfindungsgemäßen Transportvorrichtung ist vorgesehen, dass die Halteelemente derart ausgeführt sind, dass zu reinigende Trinkgefäße kopfüber aufnehmbar sind. In einem von den Halteelementen aufgenommenen Zustand sind dabei die Trinkgefäße um eine parallel zum Fördersystem verlaufende Achse relativ zu dem Fördersystem und/oder relativ zu den Halteelementen - zumindest über einen bestimmten Winkelbereich von vorzugsweise bis max. 25° - verschwenkbar gelagert.

Eine derartige schwenkbare Lagerung der Trinkgefäße in ihrem von den Halteelementen aufgenommenen Zustand erlaubt es, dass insbesondere mit Hilfe der Führung die Trinkgefäße beim Transport insbesondere durch die Spülmaschine gegenüber der ursprünglich kopfüber horizontalen Ausrichtung leicht geneigt werden. Dies bietet wesentliche Vorteile, da in dem geneigten Zustand die auf die Spülgutteile versprühte Wasch- und/oder Spülflüssigkeit leichter ablaufen kann.

So ist beispielsweise denkbar, dass die wenigstens eine Führungsschiene bzw. das wenigstens eine Führungsband derart ausgeführt ist, dass beim Transport der von den Halteelementen aufgenommenen Trinkgefäße in einem vorgegebenen oder vorgebbaren Bereich oder Abschnitt der Spülmaschine die von den Halteelementen aufgenommenen Trinkgefäße um die parallel zum Fördersystem verlaufende Achse verschwenkt werden.

In einer speziellen Realisierung der zuletzt genannten Ausführungsform, die sich insbesondere durch ihren einfachen aber dennoch effektiven Aufbau auszeichnet, ist vorgesehen, dass die mindestens eine Führung eine erste Führungsschiene bzw. ein erstes Führungsband und wenigstens eine zweite Führungsschiene bzw. wenigstens ein zweites Führungsband aufweist, wobei die erste Führungsschiene bzw. das erste Führungsband und die wenigstens eine zweite Führungsschiene bzw. das wenigstens eine zweite Führungsband zumindest bereichsweise parallel und in einer gemeinsamen, sich parallel zum Fördersystem erstreckenden, insbesondere horizontalen Ebene verlaufen.

In dem vorgegebenen oder vorgebbaren Bereich oder Abschnitt der Spülmaschine hingegen kann die wenigstens eine zweite Führungsschiene bzw. das wenigstens eine zweite Führungsband zwar nach wie vor parallel zu der wenigstens einen ersten Führungsschiene bzw. zu dem wenigstens einen ersten Führungsband verlaufen, jedoch in einer sich parallel zum Fördersystem erstreckenden, insbesondere horizontalen Ebene, die verschieden von der sich parallel zum Fördersystem erstreckenden, insbesondere horizontalen Ebene ist, in welcher sich die erste Führungsschiene bzw. das erste Führungsband in dem vorgegebenen oder vorgebbaren Bereich und vorzugsweise auch außerhalb des vorgegebenen oder vorgebbaren Bereichs oder Abschnitt der Spülmaschine erstreckt.

Mit anderen Worten, bei dieser Ausgestaltung ist vorgesehen, dass eine Führungsschiene bzw. ein Führungsband in Transportrichtung des Fördersystems gesehen, relativ zu der ersten Führungsschiene bzw. relativ zu dem ersten Führungsband leicht horizontal nach oben oder nach unten versetzt verläuft, in Folge dessen eine Kippbewegung der von der ersten und zweiten Führungsschiene bzw. dem ersten und zweiten Führungsband abgestützten Spülgutteile/Trinkgefäße erzwungen wird.

Vorzugsweise weist die mindestens eine Führung auch eine seitlich der Halteelemente verlaufende Führung auf, um die von den Halteelementen aufgenommenen oder gehaltenen Spülgutteile, insbesondere Trinkgefäße, insbesondere seitlich zu führen, wenn diese mit Hilfe des Fördersystems und den Halteelementen von einem Beladebereich der Spülmaschine zu und durch den Behandlungsbereich der Spülmaschine transportiert werden.

Das umlaufende Fördersystem ist ausgebildet, die mit dem Fördersystem verbundenen Halteelemente mit den ggf. von den Halteelementen aufgenommenen oder gehaltenen Spülgutteilen, insbesondere Trinkgefäßen, zu der Spülmaschine und vor allem durch verschiedene Bereiche oder Abschnitte der Spülmaschine zu transportieren. Hierzu weist gemäß bevorzugten Realisierungen das Fördersystem einen entsprechenden Antrieb auf, bei welchem es sich insbesondere um einen elektromotorischen Antrieb handelt. Mit diesem insbesondere elektromotorischen Antrieb ist das Fördersystem wirkverbunden oder wirkverbindbar.

Dabei bietet es sich an, dass das Fördersystem - in einer Draufsicht gesehen - stadiumförmig verläuft, wobei eine Kompaktheit der Spülmaschine verbessert werden kann, wenn das Fördersystem - in einer Draufsicht gesehen - insbesondere mäanderförmig verläuft. Auf diese Weise sind bei einem relativ geringen Platzbedarf eine Vielzahl unterschiedlicher Behandlungszonen der Spülmaschine realisierbar.

Bei den verschiedenen Bereichen oder Abschnitten der Spülmaschine handelt es sich insbesondere um folgende Bereiche/Abschnitte:
- ein Beladebereich der Spülmaschine, in welchem die zu reinigenden Spülgutteile, insbesondere Trinkgefäße, vorzugsweise kopfüber ausgerichtet insbesondere manuell und insbesondere zumindest bereichs- oder teilweise formschlüssig mit mindestens einem Halteelement der Transportvorrichtung lösbar verbindbar sind;
- ein Behandlungsbereich der Spülmaschine, in welchem die von den Halteelementen aufgenommenen oder gehaltenen Spülgutteile, insbesondere Trinkgefäße, behandelbar sind, insbesondere wasch- und klarspülbar und ggf. trockenbar sind;
- ggf. ein zwischen dem Beladebereich und dem Behandlungsbereich der Spülmaschine vorgesehenen Zuführungsbereich der Spülmaschine, in welchem die in dem Beladebereich aufgenommenen Spülgutteile, insbesondere Trinkgefäße, dem Behandlungsbereich der Spülmaschine zugeführt werden;
- ein Entladebereich der Spülmaschine, in welchem die von den Halteelementen aufgenommenen oder gehaltenen Spülgutteile, insbesondere Trinkgefäße, nach deren Behandlung in dem Behandlungsbereich der Spülmaschine von der Spülmaschine ausgebbar oder abstapelbar sind; und
- ein Rückführungsbereich der Spülmaschine, in welchem die Halteelemente mit Hilfe des Fördersystems von dem Entladebereich der Spülmaschine wieder zurück zu dem Beladebereich der Spülmaschine transportiert werden.

Die der Erfindung zu Grunde liegende Aufgabe wird ferner durch den Gegenstand des Patentanspruchs 15 gelöst, welcher eine Spülmaschine insbesondere für einen Coffeeshop und/oder für ein Schnellrestaurant zum Reinigen von Spülgut betrifft. Bei dem mit der Spülmaschine zu behandelnden/zu reinigenden Spülgut handelt es sich beispielsweise um Spülgut, welches vorzugsweise ausschließlich von dem Coffeeshop bzw. dem Schnellrestaurant ausgegeben wird.

Bei der erfindungsgemäßen Spülmaschine ist vorgesehen, dass diese einen insbesondere als Rücknahme-Einrichtung und vorzugsweise als Rücknahme-Automat für Mehrweg-Spülgutteile ausgebildeten Eingabe- oder Einstellbereich aufweist.

Die erfindungsgemäße Spülmaschine weist ferner eine Transportvorrichtung der zuvor genannten erfindungsgemäßen Art auf, um das Spülgut von dem Eingabe-oder Einstellbereich der Spülmaschine zu einem Behandlungsbereich der Spülmaschine und von dort zu einem Ausgabe- oder Entnahmebereich der Spülmaschine zu transportieren. Dem Behandlungsbereich der Spülmaschine ist ein Wasch- und Klarspülsystem zum Waschen und Klarspülen des Spülguts und ggf. ein - in Transportrichtung des Spülguts gesehen - nachgeschaltetes Trocknungssystem zum Trocknen des klargespülten Spülguts zugeordnet.

Der der Spülmaschine zugeordnete und als Rücknahme-Einrichtung und insbesondere als Rücknahme-Automat für Mehrweg-Spülgutteile ausgebildete Eingabe-oder Einstellbereich muss nicht selber Teil der Spülmaschine sein. Es kann sich hierbei insbesondere um eine entfernt von der eigentlichen Spülmaschine angeordnete Rückgabestation handeln, die über die Transportvorrichtung letztendlich mit der Spülmaschine verbunden ist, um das bei dem Eingabe- oder Einstellbereich von einem Kunden abgegebene Spülgut insbesondere dem Behandlungsbereich der Spülmaschine zuzuführen.

So kann beispielsweise vorgesehen sein, dass der der Spülmaschine zugeordnete und als Rücknahme-Einrichtung und insbesondere als Rücknahme-Automat für Mehrweg-Spülgutteile ausgebildete Eingabe- oder Einstellbereich getrennt von dem Behandlungsbereich der Spülmaschine und insbesondere von einem zum Behandlungsbereich der Spülmaschine führenden Einlauftunnel der Spülmaschine angeordnet ist.

Vorzugsweise weist der der Spülmaschine zugeordnete und als Rücknahme-Einrichtung und insbesondere als Rücknahme-Automat für Mehrweg-Spülgutteile ausgebildete Eingabe- oder Einstellbereich eine Rückvergütungseinrichtung aufweist.

Alternativ oder zusätzlich hierzu ist es denkbar, dass der der Spülmaschine zugeordnete und als Rücknahme-Einrichtung und insbesondere als Rücknahme-Automat für Mehrweg-Spülgutteile ausgebildete Eingabe- oder Einstellbereich eine Benutzerschnittstelle und eine mit einer Datenverarbeitungseinrichtung und einem Datenspeicher zusammenwirkende Identifizierungsvorrichtung für Spülgutteile aufweist, wobei die Identifizierungsvorrichtung insbesondere ein optisches Erkennungssystem aufweist und/oder wobei die Identifizierungsvorrichtung für eine Barcode-Erkennung, eine RFDI-Erkennung, eine dreidimensionale Oberflächenanalyse, ein 3D-Matching, eine Logo-Erkennung, eine OCR-Erkennung und/oder eine Farberkennung ausgebildet ist.

Gemäß Realisierungen der Erfindung ist vorgesehen, dass der der Spülmaschine zugeordnete und als Rücknahme-Einrichtung und insbesondere als Rücknahme-Automat für Mehrweg-Spülgutteile ausgebildete Eingabe- oder Einstellbereich mindestens eine Zugangsöffnung zur Aufnahme von Spülgutteilen aufweist, wobei der Zugangsöffnung ein zwischen einer Offenstellung und einer Schließstellung verstellbares Schließelement zugeordnet ist.

Insbesondere in diesem Zusammenhang ist es möglich, dass der der Spülmaschine zugeordnete und als Rücknahme-Einrichtung und insbesondere als Rücknahme-Automat für Mehrweg-Spülgutteile ausgebildete Eingabe- oder Einstellbereich mindestens eine Zugangsöffnung mit einer dem zu reinigenden Spülgutteil entsprechenden Kulisse aufweist zum Vorgeben einer Orientierung des Spülgutteils beim manuellen Einbringen des Spülgutteils in den Eingabe- oder Einstellbereich.

Gemäß Realisierungen der erfindungsgemäßen Spülmaschine ist vorgesehen, dass die Spülmaschine und insbesondere der der Spülmaschine zugeordnete und als Rücknahme-Einrichtung und insbesondere als Rücknahme-Automat für Mehrweg-Spülgutteile ausgebildete Eingabe- oder Einstellbereich eine Einrichtung zum Sortieren der Spülgutteile nach deren Größe und/oder Art aufweist, wobei vorzugsweise die nach Größe und/oder Art sortierten Spülgutteile insbesondere automatisch einer entsprechenden Transportspur der Transportvorrichtung zugeführt werden.

Gemäß Ausführungsformen der erfindungsgemäßen Spülmaschine ist vorgesehen, dass in Transportrichtung des Spülguts gesehen stromabwärts des Trocknungssystems bei dem Ausgabe- oder Entnahmebereich der Spülmaschine eine Abstapelvorrichtung vorgesehen ist zum automatischen Abstapeln der in dem Trocknungssystem getrockneten Spülgutteile.

Die Abstapelvorrichtung kann ausgebildet sein, die in dem Trocknungssystem getrockneten Spülgutteile - insbesondere nach der Größe und/oder Art der Spülgutteile sortiert - in einem entsprechenden Spülgutstapel abzustapeln.

Die Spülmaschine weist vorzugsweise eine Länge von etwa 1 bis 3 Meter, eine Höhe von etwa 1 bis 1,75 Meter und eine Breite von etwa 0,3 bis 1 Meter auf.

Vorzugsweise ist der der Spülmaschine zugeordnete Eingabe- oder Einstellbereich als Spülgutrücknahme-System ähnlich wie ein Leergutrücknahme-System ausgeführt, der die Benutzerschnittstelle mit dem Kunden des Coffeeshops bzw. Schnellrestaurants ausbildet. Hierzu umfasst der Eingabe- oder Einstellbereich der Spülmaschine mindestens eine Zugangsöffnung zur Aufnahme von Spülgutteilen, wobei der Zugangsöffnung ein zwischen einer Offenstellung und einer Schließstellung verstellbares Schließelement zugeordnet ist.

Der Kunde des Coffeeshops bzw. Schnellrestaurants gibt über die Zugangsöffnung des Eingabe- oder Einstellbereichs der Spülmaschine das zu reinigende Spülgutteil ab.

Die Benutzerschnittstelle der Spülmaschine am Eingabe- oder Einstellbereich umfasst vorzugsweise eine Identifizierungsvorrichtung mit einer Datenverarbeitungseinrichtung und einem Datenspeicher, wobei die Identifizierungsvorrichtung ausgebildet ist, das von dem Kunden über die mindestens eine Zugangsöffnung am Eingabe- oder Einstellbereich der Spülmaschine aufgegebene Spülgutteil zu identifizieren.

Beispielsweise kann hierzu die Identifizierungsvorrichtung ein optisches Erkennungssystem aufweisen. Alternativ oder zusätzlich kann die Identifizierungsvorrichtung für eine Barcode-Erkennung, eine RFID-Erkennung, eine dreidimensionale Oberflächenanalyse, ein 3D-Matching, eine Logo-Erkennung, eine OCR-Erkennung und/oder eine Farberkennung ausgebildet sein. Ein Kunde des Coffeeshops oder Schnellrestaurants kann ein zurückzugebendes Spülgutteil, wie beispielsweise einen Trinkbecher, über die mindestens eine Zugangsöffnung in den Eingabe- oder Einstellbereich der Spülmaschine eingeben. Mit der Identifizierungsvorrichtung wird erkannt, um welches Spülgutteil, beispielsweise um welche Spülgutart (Trinkgefäß, Teller, etc.) es sich handelt. Vorzugsweise ist die Identifizierungsvorrichtung bzw. die der Identifizierungsvorrichtung zugeordnete Datenverarbeitungseinrichtung ferner ausgebildet, zu identifizieren, ob es sich bei dem Spülgutteil um ein von dem Coffeeshop-Betreiber oder dem Schnellrestaurant-Betreiber ausgegebenes oder akzeptiertes Spülgutteil handelt.

Wird das Spülgutteil als ein in dem Datenspeicher hinterlegtes und von dem Aufsteller der Spülmaschine, wie beispielsweise dem Coffeeshop-Betreiber oder dem Schnellrestaurant-Betreiber akzeptiertes Spülgutteil erkannt, so kann an einer Anzeige der Benutzerschnittstelle ein für dieses Spülgutteil zu vergütender Betrag angezeigt werden. Dieser kann beispielsweise in Form einer Geldausgabe ausgezahlt werden. Es ist jedoch auch möglich, dass der Person ein Guthaben zuerkannt wird, wobei der Kaufpreis eines neuen Getränks oder eines neuen Lebensmittels um den zu vergütenden Betrag für das zurückgegebene Spülgutteil reduziert wird. Die Person kann dann entscheiden, ob er sich den entsprechenden Betrag auszahlen lassen oder ein neues Lebensmittel/eine neue Ware zu einem reduzierten Preis kaufen möchte.

Denkbar ist auch eine Auswahlmöglichkeit, wonach die Person den zu vergütenden Betrag ablehnt und das Spülgutteil wieder aus dem Eingabe- oder Einstellbereich der Spülmaschine entnimmt. Ebenso kann die Person zur Entnahme des Spülgutteils aus dem Eingabe- oder Einstellbereich der Spülmaschine aufgefordert werden, wenn das eingestellte Spülgutteil nicht identifiziert werden konnte.

Demnach ist der der Spülmaschine zugeordnete Eingabe- oder Einstellbereich als Rücknahmeautomat für Mehrweg-Spülgutteile ausgebildet und weist vorzugsweise eine Rückvergütungseinrichtung auf.

Im Hinblick auf die Rückvergütungseinrichtung ist es grundsätzlich denkbar, dass der Person ein Papier-Bon oder ein Papier-Ticket ausgegeben wird, wie es bei Leergutautomaten bekannt ist.

Allerdings ist eine papierlose und für den Kunden vereinfachte Pfand-Bon-Erstellung bevorzugt. Eine papierlose Methode wäre, einen solchen Pfand-Bon in einem Smartphone zu übertragen. Die Übertragung auf das Smartphone kann durch drahtlose Vorrichtungen erreicht werden. Eines davon funktioniert beispielsweise mittels NFC (Near Field Communication). Da die meisten Smartphones und viele Kreditkarten diesen Übertragungsstandard unterstützen kann vorzugsweise auch mit diesem Übertragungsstandard später eine weitere Ware/ein weiteres Lebensmittel in dem Coffeeshop/Schnellrestaurant bezahlt werden.

Vorzugsweise ist der insbesondere als Rücknahme-Automat ausgeführte Eingabe-oder Einstellbereich derart von dem Wasch- und Klarspülsystem sowie dem nachgeschalteten Trocknungssystem der Spülmaschine separiert, dass für den Kunden nur der als Rücknahme-Automat ausgeführte Eingabe- oder Einstellbereich sichtbar ist.

In diesem Zusammenhang bietet es sich insbesondere an, dass der Eingabe- oder Einstellbereich der Spülmaschine mindestens eine Zugangsöffnung zur Aufnahme von Spülgutteilen aufweist, wobei der Zugangsöffnung ein zwischen einer Offenstellung und einer Schließstellung verstellbares Schließelement zugeordnet ist. Das der mindestens einen Zugangsöffnung zugeordnete Schließelement öffnet sich vorzugsweise automatisch nach Betätigung eines entsprechenden Schalters bei der Benutzerschnittstelle des Eingabe- oder Einstellbereichs der Spülmaschine. Auch ist es denkbar, mittels eines Näherungssensors das Schließelement zu manipulieren.

Der der Spülmaschine zugeordnete Eingabe- oder Einstellbereich Eingabe- oder Einstellbereich der Spülmaschine ist über die Transportvorrichtung mit der Spülmaschine und den Behandlungszonen der Spülmaschine verbunden, damit das von dem Kunden beim Eingabe- oder Einstellbereich aufgegebene Spülgutteil dem Wasch- und Klarspülsystem und anschließend dem Trocknungssystem zugeführt werden kann. Hierbei ist es bevorzugt, dass die Behandlungszonen der Spülmaschine für den Kunden nicht sichtbar angeordnet sind, beispielsweise hinter einer entsprechenden Gebäudeabtrennung oder dergleichen.

Auf diese Weise lässt sich die Spülmaschine im Coffeeshop bzw. Schnellrestaurant in besonders harmonischer Weise integrieren.

Wenn der Kunde über den als Rücknahme-Automat ausgeführten Eingabe- oder Einstellbereich der Spülmaschine das Spülgutteil aufgegeben hat, und wenn die optional vorgesehene Identifizierungsvorrichtung das aufgegebene Spülgutteil akzeptiert hat, so wird dieses mit Hilfe der Transportvorrichtung in die Behandlungszonen der Spülmaschine transportiert, in denen zunächst eine Waschung, dann eine Klarspülung, ggf. eine Desinfektion und anschließend eine Trocknung stattfindet. Anschließend wird das gereinigte Spülgutteil bei dem (reinseitigen) Ausgabe- oder Entnahmebereich der Spülmaschine mit Hilfe einer Abstapelvorrichtung automatisch abgestapelt.

Gemäß bevorzugten Realisierungen der erfindungsgemäßen Spülmaschine weist der Eingabe- oder Einstellbereich der Spülmaschine mindestens eine Zugangsöffnung mit einer dem zu reinigenden Spülgutteil entsprechenden Kulisse auf, um eine Orientierung des Spülgutteils beim manuellen Einbringen des Spülgutteils in den Eingabe- oder Einstellbereich vorzugeben.

Hierbei handelt es sich um eine besonders leicht zu realisierende, insbesondere nach dem Poka-Yoke-Prinzip basierende und für den Kunden leicht verständliche Weise, dem Kunden anzugeben, in welcher Orientierung das Spülgutteil aufzugeben ist. Vorzugsweise sollte dabei das Spülgutteil in einem auf den Kopf gestellten Zustand in den Eingabe- oder Einstellbereich eingebracht werden.

Gemäß bevorzugten Realisierungen der erfindungsgemäßen Spülmaschine weist diese eine Einrichtung zum automatischen Bestimmen der Sauberkeit des in dem Wasch- und Klarspülsystem gereinigten Spülguts auf. Mit dieser Maßnahme ist sichergestellt, dass beim Ausgabe- oder Entnahmebereich der Spülmaschine nur hinreichend gereinigte Spülgutteile ausgegeben werden, die dann von dem Coffeeshop-Betreiber oder Schnellrestaurant-Betreiber zur Lebensmittelausgabe wiederverwendet werden können.

Die Einrichtung zum Bestimmen der Sauberkeit des in dem Wasch- und Klarspülsystem gereinigten Spülguts arbeitet vorzugsweise automatisch, um eine objektive Beurteilung ermöglichen zu können. Beispielsweise kann hierzu eine Kamera zum Einsatz kommen, um ein digitales Bild des zu prüfenden Spülgutteils aufzunehmen. Ferner kann die Einrichtung eine Steuereinheit zum Verarbeiten des erfassten digitalen Bilds umfassen.

Die Einrichtung zum automatischen Bestimmen der Sauberkeit des in dem Wasch-und Klarspülsystem gereinigten Spülguts ist vorzugsweise speziell auf das zu inspizierende Spülgut zugeschnitten, was das Bereitstellen geeigneter Beleuchtung, Kameraeinstellung und Kameraposition relativ zu dem Spülgutteil umfassen kann. Auf diese Weise kann das Inspektionssystem einen Helligkeitswert gemäß kontrollierten Umgebungseinstellungen erzeugen.

Gemäß Weiterbildungen des zuletzt genannten Aspekts kann vorgesehen sein, dass ein Spülgutteil automatisch erneut dem Wasch- und Klarspülsystem zugeführt wird, sollte der Sauberkeitswert nicht einem festgelegten Schwellwert entsprechen. Alternativ hierzu ist es denkbar, ein als nicht hinreichend sauber identifiziertes Spülgutteil in einem vorab festgelegten Bereich des Ausgabe- oder Entnahmebereichs der Spülmaschine abzulegen.

Der der Spülmaschine zugeordnete Eingabe- oder Einstellbereich oder ein Bereich der Spülmaschine stromaufwärts des Behandlungsbereiches der Spülmaschine kann als Aufbewahrungsbereich ausgebildet sein, um eine vorab festgelegte oder festlegbare Anzahl an zu reinigenden Spülgutteilen zwischenzuspeichern.

Gleiches gilt alternativ oder zusätzlich hierzu für den Ausgabe- oder Entnahmebereich der Spülmaschine.

Denkbar in diesem Zusammenhang ist es, dass die Spülmaschine eine Steuereinrichtung aufweist, welche ausgebildet ist, die Transportvorrichtung derart anzusteuern, dass mit der Transportvorrichtung das zu reinigende Spülgut diskontinuierlich, das heißt in einer zeitlich unterbrochenen Weise, von dem Eingabe- oder Einstellbereich der Spülmaschine durch das Wasch- und Klarspülsystem und das Trocknungssystem zu dem Ausgabe- oder Entnahmebereich der Spülmaschine transportiert wird, vorzugsweise ebenfalls auch mit unterschiedlichen Geschwindigkeiten.

Alternativ hierzu ist es aber auch denkbar, dass die Spülmaschine eine Steuereinrichtung aufweist, welche ausgebildet ist, die Transportvorrichtung derart anzusteuern, dass mit der Transportvorrichtung das zu reinigende Spülgut kontinuierlich und insbesondere mit einer vorab festgelegten oder festlegbaren Transportgeschwindigkeit oder mit einer variablen Transportgeschwindigkeit aber dennoch stetig durch das Wasch- und Klarspülsystem sowie das Trocknungssystem transportiert wird.

Die Spülmaschine kann ferner eine Steuereinrichtung aufweisen, um die Transportvorrichtung und/oder dem Wasch- und Klarspülsystem und/oder dem Trocknungssystem zugeordneten ansteuerbaren Komponenten anzusteuern. Hierbei bietet es sich an, dass die Transportvorrichtung und ggf. die dem Wasch- und Klarspülsystem und/oder dem Trocknungssystem zugeordneten ansteuerbaren Komponenten in Abhängigkeit von einer Anwesenheit oder Abwesenheit oder in Abhängigkeit einer Anzahl von Spülgutteilen im Eingabe- oder Einstellbereich und/oder im Ausgabe- oder Entnahmebereich der Spülmaschine anzusteuern.

Vorzugsweise ist das Wasch- und Klarspülsystem sowie das Trocknungssystem und insbesondere auch der Ausgabe- oder Entnahmebereich der Spülmaschine zentral in einem Spülküchenbereich untergebracht, wobei örtlich hiervon getrennt der als Rücknahme-Automat ausgeführte Eingabe- oder Einstellbereich der Spülmaschine angeordnet ist.

Mit der erfindungsgemäßen Lösung bereitet ein Wechsel eines Coffeeshops bzw. Schnellrestaurants von Wegwerfgeschirr auf wiederverwendbares Geschirr sogar betriebswirtschaftliche Vorteile, da keine Logistik insbesondere in Gestalt von Arbeitskräften zum Einsammeln des verschmutzten Geschirrs bereitzustellen ist.

Nachfolgend werden unter Bezugnahme auf die beiliegenden Zeichnungen exemplarische Ausführungsformen der vorliegenden Erfindung näher beschrieben. Es zeigen:
- FIG. 1: schematisch und in einer teilgeschnittenen Seitenansicht eine exemplarische Ausführungsform der erfindungsgemäßen Spülmaschine mit einer Ausgestaltung der erfindungsgemäßen Transportvorrichtung;
- FIG. 2: schematisch und in einer teilgeschnittenen Draufsicht die exemplarische Ausführungsform der erfindungsgemäßen Spülmaschine gemäß FIG. 1;
- FIG. 3: schematisch und in einer isometrischen Ansicht die bei der exemplarischen Ausführungsform der erfindungsgemäßen Spülmaschine gemäß FIG. 1 zum Einsatz kommende Transportvorrichtung mit von den Halteelementen der Transportvorrichtung aufgenommenen Spülgutteilen (Trinkgefäße);
- FIG. 4: schematisch und in einer Draufsicht die exemplarische Ausführungsform der erfindungsgemäßen Transportvorrichtung gemäß FIG. 3;
- FIG. 5: schematisch und in einer Seitenansicht die exemplarische Ausführungsform der erfindungsgemäßen Transportvorrichtung gemäß FIG. 4;
- FIG. 6: schematisch und in einer Längssicht in Transportrichtung des Spülguts die exemplarische Ausführungsform der erfindungsgemäßen Transportvorrichtung gemäß FIG. 4;
- FIG. 7: schematisch und in einer Seitenansicht die exemplarische Ausführungsform der erfindungsgemäßen Transportvorrichtung gemäß FIG. 5, jedoch ohne von den Halteelementen der Transportvorrichtung aufgenommene Spülgutteile/Trinkgefäße;
- FIG. 8: schematisch und in einer Draufsicht die exemplarische Ausführungsform der erfindungsgemäßen Transportvorrichtung gemäß FIG. 4, jedoch ohne von den Halteelementen der Transportvorrichtung aufgenommenen Spülgutteile/Trinkgefäße;
- FIG. 9: schematisch und in einer Seitenansicht bzw. Draufsicht eine alternative Ausführungsform der erfindungsgemäßen Transportvorrichtung;
- FIG. 10: schematisch und in einer Seitenansicht eine alternative Ausführungsform der erfindungsgemäßen Transportvorrichtung;
- FIG. 11: schematisch und in einer Draufsicht bzw. Längssichtansicht eine alternative Ausgestaltung der erfindungsgemäßen Transportvorrichtung;
- FIG. 12: schematisch und in einer Seitenansicht eine alternative Ausführungsform der erfindungsgemäßen Transportvorrichtung; und
- FIG. 13: schematisch und in einer Draufsicht eine alternative Ausführungsform der Transportvorrichtung, bei welcher das Fördersystem mäanderförmig verläuft.

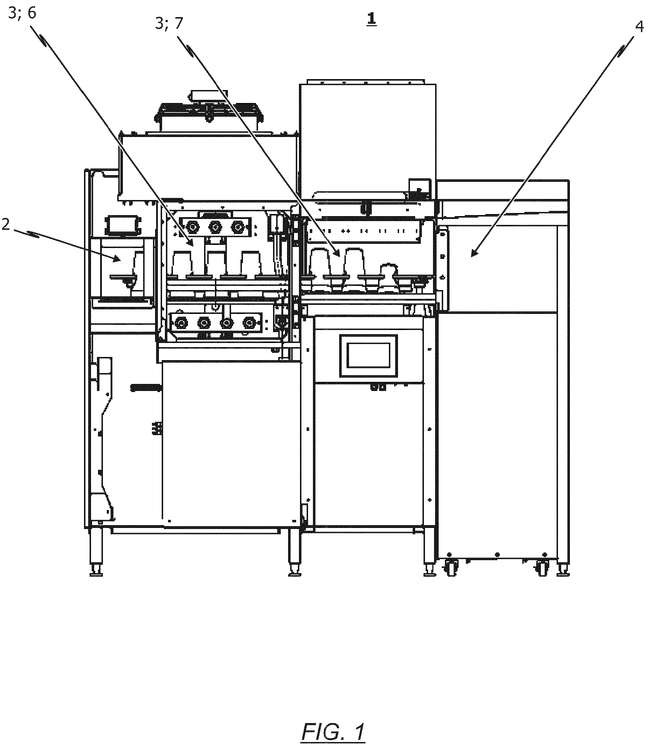

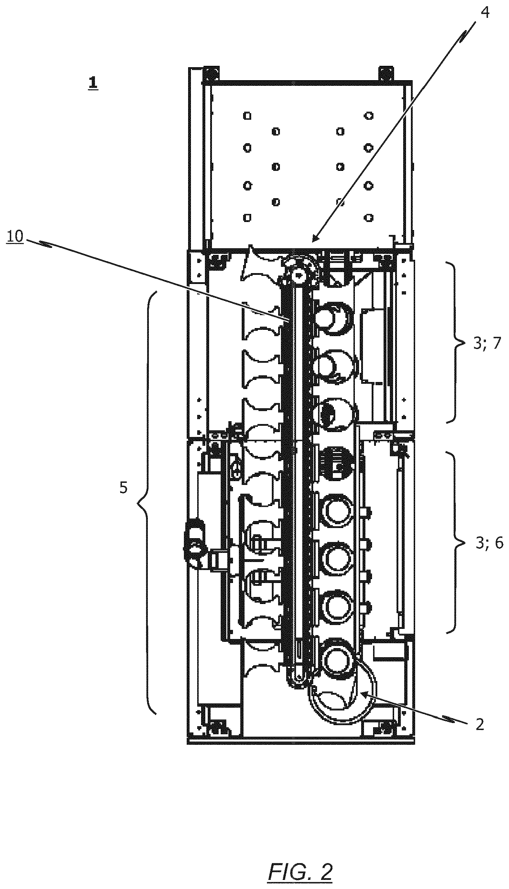

Eine exemplarische Ausführungsform der erfindungsgemäßen Spülmaschine 1 ist in FIG. 1 und FIG. 2 schematisch dargestellt. Die Spülmaschine 1 eignet sich insbesondere für Coffeeshops oder Schnellrestaurants, bei denen Mehrweggeschirr zum Einsatz kommt, welches von dem Kunden zurückgegeben wird.

Hierzu weist die Spülmaschine 1 gemäß der in FIG. 1 und FIG. 2 gezeigten exemplarischen Ausführungsform einen Eingabe- oder Einstellbereich 2 auf. Der Eingabe- oder Einstellbereich 2 kann beispielsweise als Rücknahme-Automat für Mehrweg-Spülgutteile ausgeführt sein.

Im vorliegenden Fall wird die Erfindung, also die erfindungsgemäße Transportspülmaschine 1 und die erfindungsgemäße Transportvorrichtung 10 der Spülmaschine 1, im Zusammenhang mit der Reinigung von Trinkgefäßen 100 beschrieben. Bei den Trinkgefäßen 100 handelt es sich insbesondere um becherförmige Trinkgefäße, die in Coffeeshops bzw. Schnellrestaurants für Warmgetränke (Kaffeegetränke etc.) oder Kaltgetränke ausgegeben werden.

Allerdings ist die erfindungsgemäße Lösung nicht auf den Transport bzw. die Behandlung einer solchen Spülgutart beschränkt. Durch eine leichte Modifikation und Anpassung der Halteelemente 12, 13 der Transportvorrichtung 10 ist die Spülmaschine 1 bzw. die Transportvorrichtung 10 auch für andere und insbesondere auch für mehrere unterschiedliche Spülgutarten geeignet, wie beispielsweise Teller, Schalen, etc.

Die erfindungsgemäße Spülmaschine 1 bzw. die erfindungsgemäße Transportvorrichtung 10, wie sie in den beiliegenden Zeichnungen gezeigt ist, eignet sich insbesondere für den (sicheren) Transport und Behandlung von Spülgutteilen unterschiedlicher Größe und/oder Formgebung. Bei den in den Zeichnungen gezeigten exemplarischen Ausführungsformen kommen insbesondere unterschiedlich große Trinkgefäße 100 zum Einsatz.

Der Eingabe- oder Einstellbereich 2 der Spülmaschine 1, der - wie ausgeführt - insbesondere als Rücknahme-Automat für Mehrweg-Spülgutteile ausgeführt sein kann, ist vorzugsweise für den Kunden des Coffeeshops bzw. Schnellrestaurants zugänglich aufgestellt. Er kann eine Benutzerschnittstelle und eine mit einer Datenverarbeitungseinrichtung und einem Datenspeicher zusammenwirkende Identifizierungsvorrichtung für Spülgutteile aufweisen, um das von dem Kunden zurückgegebene bzw. beim Eingabe- oder Einstellbereich 2 der Spülmaschine 1 aufgegebene Spülgutteil zu identifizieren.

Vorzugsweise weist der Eingabe- oder Einstellbereich 2 der Spülmaschine 1 mindestens eine Zugangsöffnung auf, wobei der Zugangsöffnung ein zwischen einer Offenstellung und einer Schließstellung verschließbares Schließelement zugeordnet sein kann.

Von dem Eingabe- oder Einstellbereich 2 der Spülmaschine 1 wird das aufgegebene und ggf. entsprechend identifizierte Spülgutteil 100 mit Hilfe der Transportvorrichtung 10 zu dem Behandlungsbereich der Spülmaschine 1 transportiert. Bei dem Behandlungsbereich der Spülmaschine 1 handelt es sich insbesondere um eine Behandlungszone 6 mit einem Wasch- und Klarspülsystem sowie um eine - in Transportrichtung des Spülguts 100 gesehen - nachgeschaltete Trocknungszone 7.

Vorzugsweise weist der Eingabe- oder Einstellbereich 2 der Spülmaschine 1 mindestens eine Zugangsöffnung mit einer dem zu reinigenden Spülgutteil 100 entsprechenden Kulisse auf, um eine Orientierung des Spülgutteils 100 beim manuellen Einbringen des Spülgutteils 100 in den Eingabe- oder Einstellbereich 2 vorzugeben.

Alternativ oder zusätzlich hierzu kann die Spülmaschine 1 vorzugsweise beim Eingabe- oder Einstellbereich 2 oder stromaufwärts des Behandlungsbereichs 6, 7 der Spülmaschine 1 eine Einrichtung zum Sortieren der Spülgutteile 100 nach deren Größe und/oder Art aufweisen, wobei die nach Größe und/oder Art sortierten Spülgutteile 100 dann den entsprechenden Behandlungszonen 6, 7 der Spülmaschine 1 zugeführt werden können.

Bei den in den Zeichnungen gezeigten exemplarischen Ausführungsformen der Transportvorrichtung 10 weist diese insgesamt eine einzige Transportspur auf, welche ausgebildet ist, die zu reinigenden Spülgutteile 100 insgesamt in einer Reihe angeordnet zu der Spülmaschine 1 und durch die Spülmaschine 1 zu transportieren.

Grundsätzlich ist es aber auch denkbar, dass die Transportvorrichtung 10 mehrere parallel verlaufende Transportspuren aufweist, welche ausgebildet sind, zeitgleich und parallel mindestens zwei Spülgutteile 100 durch die Spülmaschine 1 zu transportieren.

Beim Ausgabe- oder Entnahmebereich 4 kann eine Abstapelvorrichtung vorgesehen sein, welche ausgebildet ist, die in dem Trocknungssystem 7 der Spülmaschine 1 getrockneten Spülgutteile 100 in einen entsprechenden Spülgutstapel abzustapeln.

Alternativ hierzu ist es aber auch denkbar, dass die gereinigten und getrockneten Spülgutteile 100 in einem beim Ausgabe- oder Entnahmebereich 4 der Spülmaschine 1 vorgesehenen Bereich, oder in einen Behälter oder dergleichen ausgegeben werden, also ohne Stapelbildung.

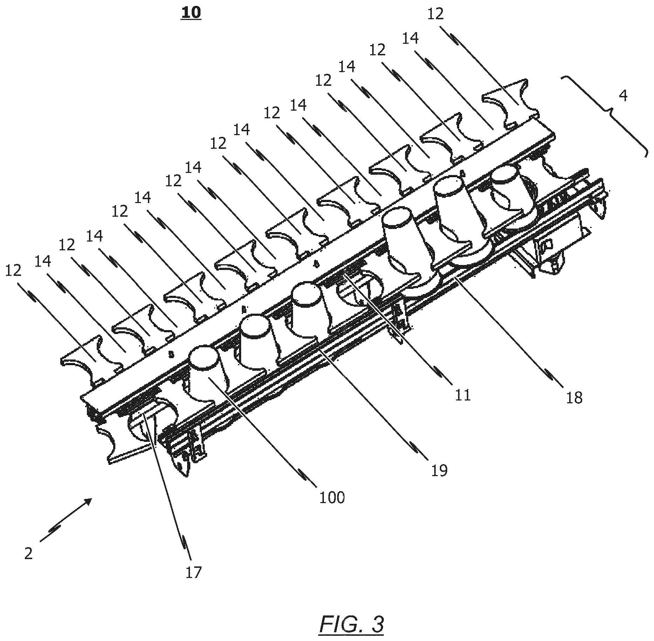

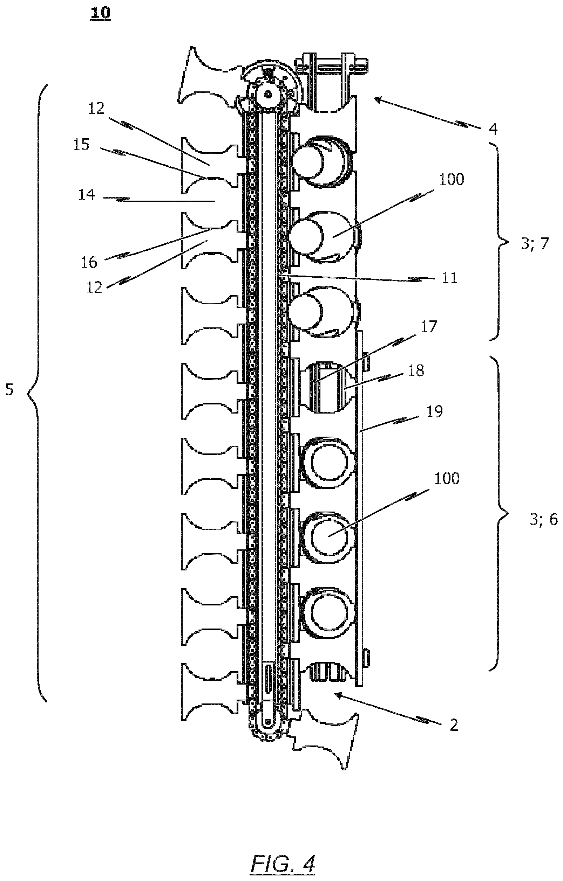

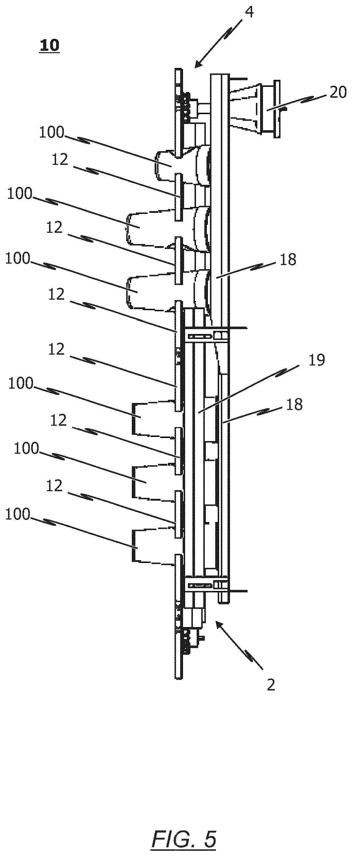

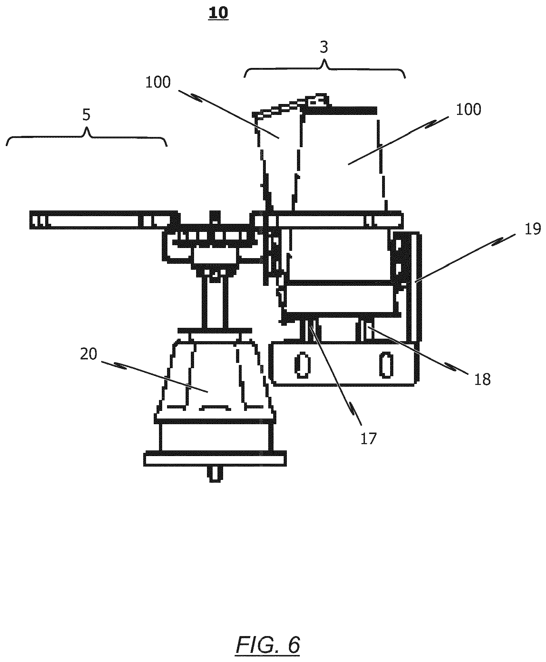

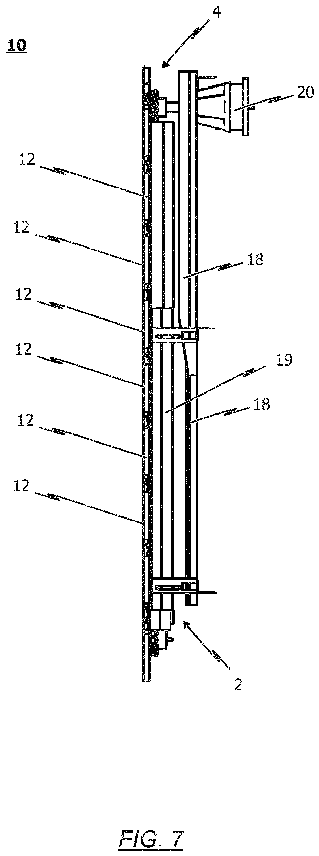

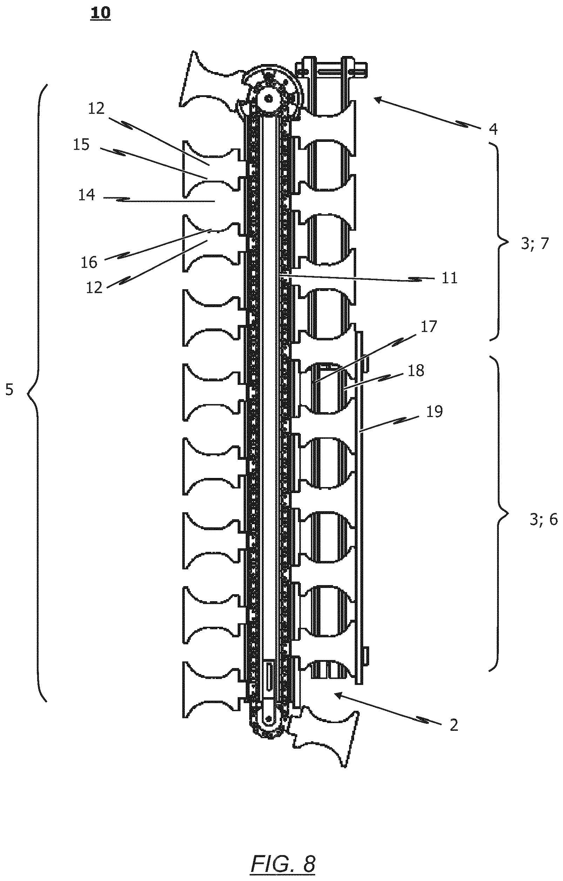

Die erfindungsgemäße Spülmaschine 1, wie sie schematisch anhand einer exemplarischen Ausführungsform in FIG. 1 und FIG. 2 gezeigt ist, zeichnet sich insbesondere durch eine spezielle und insbesondere an den Einsatz der Spülmaschine 1 in einem Coffeeshop und/oder in einem Schnellrestaurant angepasste und optimierte Transportvorrichtung 10 aus. Die bei der in FIG. 1 und FIG. 2 gezeigten Spülmaschine 1 zum Einsatz kommende Transportvorrichtung 10 wird anschließend unter Bezugnahme insbesondere auf die Darstellungen in FIG. 3 bis FIG. 8 näher beschrieben.

Wie bereits angedeutet, dient die exemplarische Ausführungsform der in FIG. 3 bis FIG. 8 gezeigten Transportvorrichtung 10 insbesondere dazu, zu reinigende Trinkgefäße 100 zu bzw. durch die Spülmaschine 1 zu transportieren. Die Verwendung der Transportvorrichtung 10 zum Transport von Trinkgefäßen 100 ist jedoch nicht als einschränkend anzusehen.

Allgemein weist die Transportvorrichtung 10 ein umlaufendes Förderband, insbesondere in Gestalt einer umlaufenden Transportkette oder in Gestalt eines umlaufenden Förderbands, auf. Mit dem umlaufenden Fördersystem ist eine Vielzahl von Halteelemente 12 verbunden. Die Halteelemente 12 sind ausgebildet, lösbar zu reinigende Spülgutteile 100 (hier: Trinkgefäße), insbesondere formschlüssig und vorzugsweise zumindest bereichs- oder teilweise formschlüssig aufzunehmen und diese dann lösbar zu halten.

Die in FIG. 3 bis FIG. 8 gezeigte exemplarische Ausführungsform der erfindungsgemäßen Transportvorrichtung 10 weist ferner ein Abstützsystem 17, 18, 19 zum zumindest teil- und/bereichsweisen Abstützen der von den Halteelementen aufgenommenen Spülgutteile 100 (hier: Trinkgefäße) auf.

Bei der in FIG. 3 bis FIG. 8 gezeigten exemplarischen Ausführungsform der erfindungsgemäßen Transportvorrichtung 10 sind die Halteelemente 12 jeweils als im Hinblick auf die Förderrichtung des umlaufenden Fördersystems 11 radial von dem Fördersystem 11 abstehende und zumindest bereichs- oder abschnittsweise horizontal mit dem umlaufenden Fördersystem 11 transportierte Mitnehmer ausgebildet. Dabei wird zwischen zwei benachbarten Mitnehmern 12 ein insbesondere taschenförmiger Aufnahmebereich 14 ausgebildet. In diesem taschenförmigen Aufnahmebereich 14 ist ein Spülgutteil 100 (hier: Trinkgefäß) zumindest teil- oder bereichsweise aufnehmbar.

Insbesondere ist bei der in FIG. 3 bis FIG. 8 gezeigten exemplarischen Ausführungsform der erfindungsgemäßen Transportvorrichtung 10 vorgesehen, dass der taschenförmige Aufnahmebereich 14 zwischen zwei benachbarten Mitnehmern 12 ausgebildet wird, und zwar durch einen ersten kreissegmentförmigen Abschnitt 15 eines ersten Mitnehmers 12 und durch einen zweiten kreissegmentförmigen Abschnitt 16 eines zum ersten Mitnehmer 12 benachbarten zweiten Mitnehmers 12.

Obgleich in den Zeichnungen nicht dargestellt, ist es grundsätzlich denkbar, dass der taschenförmige Aufnahmebereich 14, der durch die Halteelemente 12 gebildet wird, zumindest teil- oder bereichsweise derart flexibel ausgeführt ist, dass in dem taschenförmigen Aufnahmebereich 14 Spülgutteile 100 (hier: Trinkgefäße) unterschiedlicher Größe und insbesondere mit unterschiedlichem Durchmesser oder mit einer unterschiedlichen Außengeometrie zumindest teil- oder bereichsweise aufnehmbar sind.

Alternativ zu den Halteelementen 12, die bei der in FIG. 3 bis FIG. 8 gezeigten Transportvorrichtung 10 zum Einsatz kommen, bei denen zwischen zwei benachbarten Halteelementen 12 der insbesondere taschenförmige Aufnahmebereich 14 ausgebildet oder ausbildbar ist, ist es auch denkbar, dass die Halteelemente 12 als Mitnehmer ausgeführt sind, wobei jeder Mitnehmer selber einen insbesondere taschenförmigen und vorzugsweise insbesondere sterntaschenförmigen Aufnahmebereich 14 aufweist, in welchem ein Spülgutteil, wie beispielsweise ein Trinkgefäß, zumindest teil- oder bereichsweise aufnehmbar ist. Denkbar in diesem Zusammenhang ist es insbesondere, dass der taschenförmige Aufnahmebereich 14 durch mindestens einen kreissegmentförmigen Abschnitt des Mitnehmers selber gebildet ist.

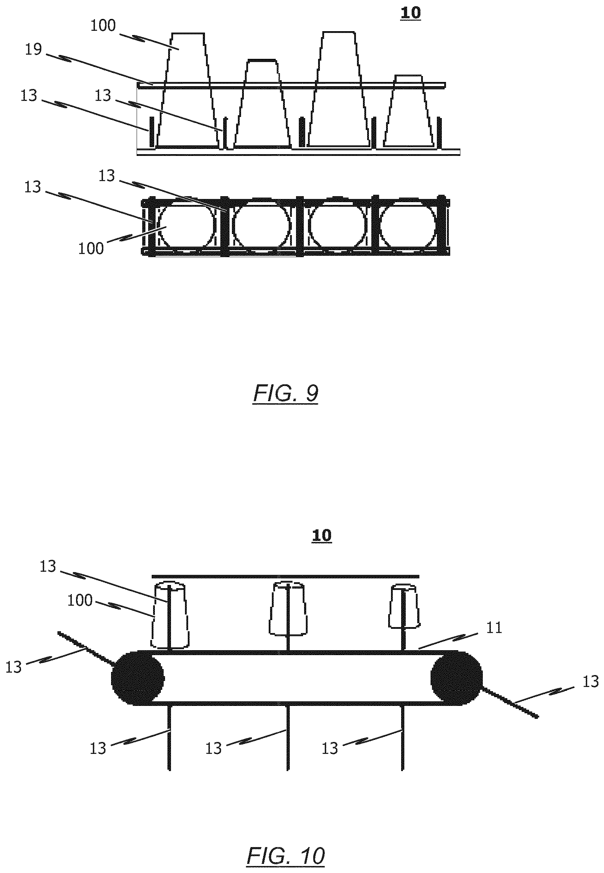

Selbstverständlich kommen aber auch andere Ausgestaltungen für die Halteelemente 12, 13 zum Einsatz, wie es beispielsweise in FIG. 9, FIG. 10, FIG. 11 und FIG. 12 gezeigt ist.

Die schematisch in FIG. 9, FIG. 10 und FIG. 12 gezeigten Ausgestaltungen der erfindungsgemäßen Transportvorrichtung 10 haben gemeinsam, dass die Halteelemente der Transportvorrichtung 10 als im Hinblick auf die Förderrichtung des umlaufenden Fördersystems 11 radial von dem Fördersystem 11 abstehende und zumindest bereichs- oder abschnittsweise vertikal mit dem umlaufenden Fördersystem 11 transportierte Aufnahmefinger oder Aufnahmestifte 13 aufweisen, wobei jeder Aufnahmefinger oder Aufnahmestift 13 insbesondere ausgebildet ist, ein kopfüber ausgerichtetes Trinkgefäß 100 zumindest teil- oder bereichsweise aufzunehmen.

Denkbar ist es aber auch, dass zwischen zwei benachbarten Aufnahmefingern bzw. Aufnahmestiften 13 ein insbesondere kopfüber ausgerichtetes Trinkgefäß 100 aufgenommen wird (vgl. FIG. 9).

Das Abstützsystem 17, 18, 19 der erfindungsgemäßen Transportvorrichtung 10 weist mindestens eine sich zumindest bereichsweise parallel zum Fördersystem 11 erstreckende Führung auf.

Bei den in den Zeichnungen gezeigten Ausführungsformen der erfindungsgemäßen Transportvorrichtung 10 ist die mindestens eine sich zumindest bereichsweise parallel zum Fördersystem 11 erstreckende Führung statisch ausgebildet. Denkbar ist es jedoch auch, dass die Führung zumindest bereichsweise zum Fördersystem 11 verläuft und insbesondere mit dem Fördersystem 11 mitläuft, wenn das Fördersystem 11 im Betrieb ist.

Im Einzelnen bietet es sich in diesem Zusammenhang an, dass die mindestens eine Führung unterhalb der Halteelemente 12, 13 verläuft und zum insbesondere vertikalen Abstützen der von den Halteelementen aufgenommenen oder gehaltenen Spülgutteile 100 (hier: Trinkgefäße) dient.

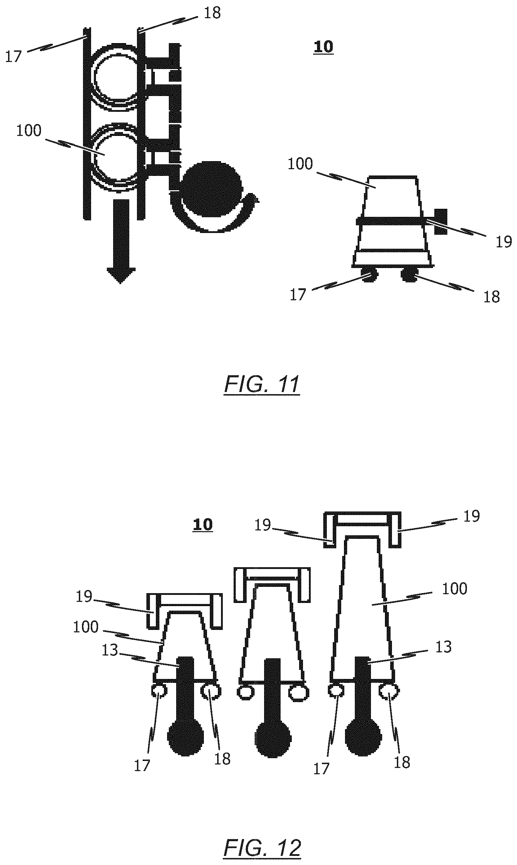

Wie in FIG. 10 gezeigt, ist es aber auch denkbar, dass eine solche Führung auch oberhalb der Halteelemente 12, 13 verläuft. Gleiches gilt für die in FIG. 12 schematisch dargestellte Ausführungsvariante.

Bei der in FIG. 3 bis FIG. 8 gezeigten Ausführungsform der erfindungsgemäßen Transportvorrichtung 10 weist die unterhalb der Halteelemente 12, 13 verlaufende mindestens eine Führung wenigstens eine sich zumindest bereichsweise parallel zum Fördersystem 11 erstreckende Führungsschiene 17, 18 bzw. wenigstens ein sich zumindest bereichsweise parallel zum Fördersystem 11 erstreckendes Führungsband auf.

Wie in den Zeichnungen gezeigt, ist bei allen exemplarischen Ausführungsformen der erfindungsgemäßen Transportvorrichtung 10 vorzugsweise vorgesehen, dass die Halteelemente 12, 13 derart ausgeführt sind, dass zu reinigende Trinkgefäße 100 kopfüber aufnehmbar sind. Dabei ist bei der erfindungsgemäßen Transportvorrichtung 10 insbesondere vorgesehen, dass in einem von den Halteelementen aufgenommenen Zustand die Trinkgefäße 100 um eine parallel zum Fördersystem 11 verlaufende Achse relativ zu dem Fördersystem 11 verschwenkbar gelagert sind.

Um in einem vorgegebenen oder vorgebbaren Bereich oder Abschnitt der Spülmaschine 1 die von den Halteelementen aufgenommenen Trinkgefäße 100 um die parallel zum Fördersystem 11 verlaufende Achse zu verschwenken, ist bei der in FIG. 3 bis FIG. 8 schematisch gezeigten exemplarischen Ausführungsform der erfindungsgemäßen Transportvorrichtung 10 vorgesehen, dass die wenigstens eine Führungsschiene 17, 18 bzw. das wenigstens eine Führungsband derart ausgeführt ist, dass beim Transport der von den Halteelementen aufgenommenen Trinkgefäße 100 die Trinkgefäße 100 um die parallel zum Fördersystem 11 verlaufende Achse verschwenkt werden.

Im Einzelnen kommt bei der in FIG. 3 bis FIG. 8 schematisch gezeigten Ausführungsform eine erste Führungsschiene 17 bzw. ein erstes Führungsband sowie eine zweite Führungsschiene 18 bzw. ein zweites Führungsband zum Einsatz, wobei die erste Führungsschiene 17 bzw. das erste Führungsband und die zweite Führungsschiene 18 bzw. das zweite Führungsband zumindest bereichsweise parallel und in einer gemeinsamen, sich parallel zum Fördersystem 11 erstreckenden, insbesondere horizontalen Ebene verlaufen.

In dem vorgegebenen oder vorgebbaren Bereich oder Abschnitt der Spülmaschine 1, in welchem die von den Halteelementen 12 aufgenommenen Trinkgefäße 100 um die parallel zum Fördersystem 11 verlaufende Achse verschwenkt vorliegen sollen, hingegen verläuft die zweite Führungsschiene 18 bzw. das zweite Führungsband nach wie vor parallel zu der ersten Führungsschiene 17 bzw. zu dem ersten Führungsband, jedoch in einer sich parallel zum Fördersystem 11 erstreckenden, insbesondere horizontalen Ebene, die verschieden von der sich parallel zum Fördersystem 11 erstreckenden, insbesondere horizontalen Ebene ist, in welcher sich die erste Führungsschiene 17 bzw. das erste Führungsband erstreckt. Auf diese Weise wird die erwünschte Verschwenkung der Spülgutteile 100 erzielt.

Das umlaufende Fördersystem 11 der erfindungsgemäßen Transportvorrichtung 10 ist ausgebildet, die mit dem Fördersystem 11 verbundenen Halteelemente 12, 13 mit den ggf. von den Halteelementen 12, 13 aufgenommenen oder gehaltenen Spülgutteilen (hier: Trinkgefäßen 100) durch verschiedene Bereiche oder Abschnitte der Spülmaschine 1 zu transportieren. Hierzu weist das Fördersystem 11 einen entsprechenden Antrieb 20, insbesondere elektromotorischen Antrieb, auf.

Dem Antrieb 20 des Fördersystems 11 ist eine (in den Zeichnungen nicht explizit gezeigte) Steuereinrichtung zugeordnet, welche ausgebildet ist, den Antrieb 20 insbesondere bedarfsweise anzusteuern. Die Steuereinrichtung ist vorzugsweise ausgebildet, insbesondere bedarfsweise, automatisch oder wahlweise automatisch den Antrieb 20 derart anzusteuern, dass mit dem Fördersystem 11 die Halteelemente 12, 13 kontinuierlich mit einer konstanten Transportgeschwindigkeit oder mit einer variierenden Transportgeschwindigkeit durch die Bereiche oder Abschnitte der Spülmaschine 1 transportiert werden.

Alternativ hierzu ist die Steuereinrichtung ausgebildet, nur dann das Fördersystem 11 anzutreiben, wenn in den Eingabe- oder Einstellbereich 2 ein Spülgutteil aufgegeben wurde, um so den Eingabe- oder Einstellbereich 2 wieder zur Aufnahme eines weiteren Spülgutteils vorzubereiten.

Denkbar ist es, dass die Steuereinrichtung ausgebildet ist, insbesondere bedarfsweise, automatisch oder wahlweise automatisch den Antrieb 20 derart anzusteuern, dass mit dem Fördersystem 11 die Halteelemente 12, 13 diskontinuierlich und insbesondere schrittförmig durch die Bereiche oder Abschnitte der Spülmaschine 1 transportiert werden. Der diskontinuierliche Transport ist vorzugsweise derart gewählt, dass insbesondere sensorgesteuert das Fördersystem 11 immer dann die Halteelemente 12, 13 um eine insbesondere vorab festgelegte oder festlegbare Wegstrecke weitertransportieren, wenn in dem Eingabe- oder Einstellbereich 2 bzw. in dem Beladebereich der Spülmaschine 1 mindestens ein Spülgutteil aufgenommen ist.

Wie bereits im Zusammenhang mit der in FIG. 1 und FIG. 2 schematisch gezeigten exemplarischen Ausführungsform der erfindungsgemäßen Spülmaschine 1 ausgeführt, umfasst die Spülmaschine 1 verschiedene Bereiche oder Abschnitte. Hierbei handelt es sich insbesondere um einen Beladebereich 2 der Spülmaschine 1, der dem Eingabe- oder Einstellbereich der Spülmaschine 1 entspricht, und in welchem die zu reinigenden Spülgutteile 100 (hier: insbesondere Trinkgefäße) vorzugsweise kopfüber ausgerichtet insbesondere manuell und insbesondere zumindest bereichs- oder teilweise formschlüssig mit mindestens einem Halteelement 12, 13 der Transportvorrichtung 10 lösbar verbindbar sind.

In Transportrichtung der Spülgutteile 100 gesehen, folgt dem Beladebereich 2 der Spülmaschine 1 der Behandlungsbereich 3 der Spülmaschine 1, in welchem die von den Halteelementen 12, 13 aufgenommenen oder gehaltenen Spülgutteile 100 behandelbar sind, insbesondere wasch- und klarspülbar und ggf. trockenbar.

Entgegen der in FIG. 1 und FIG. 2 gezeigten exemplarischen Ausführungsform der erfindungsgemäßen Spülmaschine 1 kann zwischen dem Beladebereich 2 der Spülmaschine 1 und dem Behandlungsbereich 3 der Spülmaschine 1 ein zwischengeschalteter Zuführungsbereich der Spülmaschine 1 ausgebildet sein, in welchem die in dem Beladebereich 2 aufgenommenen Spülgutteile 100 dem Behandlungsbereich 3 zugeführt werden. Ein derartiger Zuführungsbereich bietet sich insbesondere dann an, wenn der Eingabe- oder Einstellbereich 2 der Spülmaschine 1 entfernt von dem eigentlichen Behandlungsbereich 3 der Spülmaschine 1 ausgebildet ist.

In Transportrichtung der Spülgutteile 100 gesehen schließt sich an den Behandlungsbereich 3 der Spülmaschine 1 ein Entladebereich 4 der Spülmaschine 1 an, in welchem die von den Halteelementen 12, 13 aufgenommenen oder gehaltenen Spülgutteile 100 nach deren Behandlung in dem Behandlungsbereich 3 der Spülmaschine 1 von der Spülmaschine 1 ausgebbar oder abstapelbar sind.

Anschließend folgt ein Rückführungsbereich 5 der Spülmaschine 1, in welchem die Halteelemente 12, 13 mit Hilfe des Fördersystems 11 von dem Entladebereich 4 der Spülmaschine 1 wieder zurück zu dem Beladebereich 2 der Spülmaschine 1 transportiert werden.

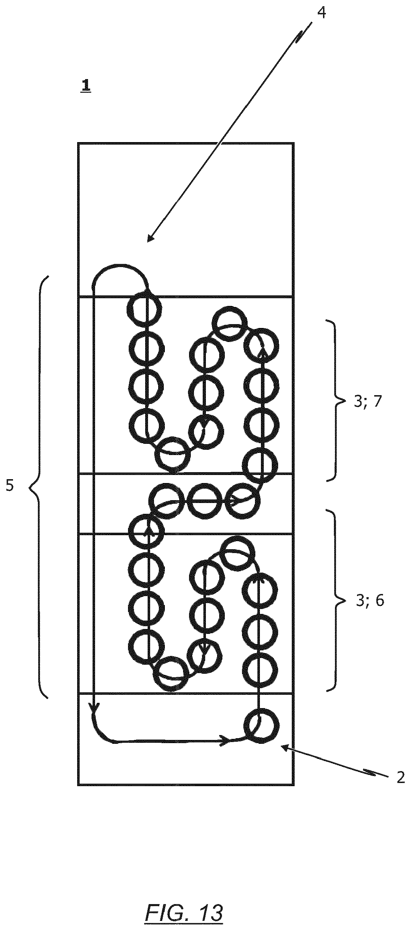

Wie in FIG. 13 angedeutet, bietet es sich in diesem Zusammenhang insbesondere an, dass - in einer Draufsicht gesehen - das Fördersystem 11 der Transportvorrichtung 10 mäanderförmig verläuft, um so auf dem von dem Fördersystem 11 vorgegebenen Transportweg die unterschiedlichen Bereiche/Abschnitte der Spülmaschine 1 passieren zu können ohne dadurch den Aufstellbereich der Spülmaschine 1 zumindest wesentlich zu vergrößern.

An Stelle eines solchen mäanderförmigen Verlaufs ist es selbstverständlich aber auch denkbar, dass das Fördersystem 11 - in einer Draufsicht gesehen - stadiumförmig verläuft, wie es bei der exemplarischen Ausführungsform der erfindungsgemäßen Transportvorrichtung 10 gemäß FIG. 3 bis FIG. 8 der Fall ist.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: Spülmaschine
- 2: Beladebereich/Eingabe- oder Einstellbereich der Spülmaschine
- 3: Behandlungsbereich der Spülmaschine
- 4: Entladebereich/Ausgabe- oder Entnahmebereich der Spülmaschine
- 5: Rückführungsbereich der Spülmaschine
- 6: Wasch-/Klarspülzone
- 7: Trocknungszone

- 10: Transportvorrichtung
- 11: Fördersystem
- 12: Halteelement/Mitnehmer
- 13: Halteelement/Aufnahmefinger bzw. Aufnahmestift
- 14: taschenförmiger Aufnahmebereich
- 15: erster kreissegmentförmiger Abschnitt
- 16: zweiter kreissegmentförmiger Abschnitt
- 17: erste Führungsschiene/erstes Führungsband
- 18: zweite Führungsschiene/zweites Führungsband
- 19: seitliche Führung
- 20: Antrieb

- 100: Spülgutteil

## Patentansprüche

1. Transportvorrichtung (10) für eine Spülmaschine (1), insbesondere für eine Spülmaschine (1) eines Coffeeshops und/oder eines Schnellrestaurants, zum Transportieren von zu reinigenden Spülgutteilen (100), insbesondere Trinkgefäßen, durch mindestens eine Behandlungszone der Spülmaschine (1) und/oder zum Zuführen von zu reinigenden Spülgutteilen (100), insbesondere Trinkgefäßen, zu der Spülmaschine (1), wobei die Transportvorrichtung (10) Folgendes aufweist:
- ein umlaufendes Fördersystem (11), insbesondere in Gestalt einer umlaufenden Transportkette oder in Gestalt eines umlaufenden Förderbands;
- eine Vielzahl von Halteelemente (12, 13), die mit dem umlaufenden Fördersystem (11) verbunden und ausgebildet sind, lösbar zu reinigende Spülgutteile (100), insbesondere Trinkgefäße, insbesondere formschlüssig und vorzugsweise zumindest bereichs- oder teilweise formschlüssig aufzunehmen und/oder lösbar zu halten; und
- ein Abstützsystem (17, 18, 19) zum zumindest teil- und/oder bereichsweisen Abstützen der von den Halteelementen (12, 13) aufgenommenen Spülgutteile (100), insbesondere Trinkgefäße.
wobei die Halteelemente (12, 13) jeweils als im Hinblick auf die Förderrichtung des umlaufenden Fördersystems (11) radial von dem Fördersystem (11) abstehende und zumindest bereichs- oder abschnittsweise horizontal mit dem umlaufenden Fördersystem (11) transportierte oder transportierbare Mitnehmer (12) ausgebildet sind, wobei jeder Mitnehmer (12) einen taschenförmigen und vorzugsweise sterntaschenförmigen Aufnahmebereich (14) aufweist, in welchem ein Spülgutteil (100), insbesondere Trinkgefäß, zumindest teil- oder bereichsweise aufnehmbar ist, oder wobei die Halteelemente (12, 13) jeweils als im Hinblick auf die Förderrichtung des umlaufenden Fördersystems (11) radial von dem Fördersystem (11) abstehende und zumindest bereichs- oder abschnittsweise horizontal mit dem umlaufenden Fördersystem (11) transportierte oder transportierbare Mitnehmer (12) ausgebildet sind, wobei zwischen zwei benachbarten Mitnehmern (12) ein taschenförmiger und vorzugsweise sterntaschenförmiger Aufnahmebereich (14) ausgebildet oder ausbildbar ist, in welchem ein Spülgutteil (100), insbesondere Trinkgefäß, zumindest teil- oder bereichsweise aufnehmbar ist, wobei der taschenförmige und vorzugsweise sterntaschenförmige Aufnahmebereich (14) zwischen zwei benachbarten Mitnehmern (12) gebildet ist,
wobei das Abstützsystem (17, 18, 19) mindestens eine sich zumindest bereichsweise parallel zum Fördersystem (11) erstreckende Führung und/oder mindestens eine zumindest bereichsweise parallel zum Fördersystem (11) verlaufende und insbesondere mit dem Fördersystem (11) mitlaufende Führung aufweist,
und **dadurch gekennzeichnet, dass**:
die mindestens eine Führung unterhalb der Halteelemente (12, 13) verläuft und zum vertikalen Abstützen der von den Halteelementen (12, 13) aufgenommenen oder gehaltenen Spülgutteile (100), insbesondere Trinkgefäße, dient, wobei die mindestens eine Führung wenigstens eine sich zumindest bereichsweise parallel zum Fördersystem (11) erstreckende Führungsschiene oder wenigstens ein sich zumindest bereichsweise parallel zum Fördersystem (11) erstreckendes Führungsband aufweist, oder wobei die mindestens eine Führung wenigstens eine zumindest bereichsweise parallel zum Fördersystem (11) verlaufende und insbesondere mit dem Fördersystem (11) mitlaufende Führungsschiene oder mindestens ein zumindest bereichsweise parallel zum Fördersystem (11) verlaufendes und insbesondere mit dem Fördersystem (11) mitlaufendes Führungsband aufweist, und
wobei die Halteelemente (12, 13) derart ausgeführt sind, dass zu reinigende Trinkgefäße kopfüber aufnehmbar sind, wobei in einem von den Halteelementen (12, 13) aufgenommenen Zustand die Trinkgefäße um eine parallel zum Fördersystem (11) verlaufende Achse relativ zu dem Fördersystem (11) und/oder relativ zu den Halteelementen (12, 13) verschwenkbar gelagert sind.

2. Transportvorrichtung (10) nach Anspruch 1,
wobei der taschenförmige und vorzugsweise sterntaschenförmige Aufnahmebereich (14) durch mindestens einen kreissegmentförmigen Abschnitt (15, 16) des Mitnehmers (12) gebildet ist.

3. Transportvorrichtung (10) nach Anspruch 1,
wobei der taschenförmige und vorzugsweise sterntaschenförmige Aufnahmebereich (14) zwischen zwei benachbarten Mitnehmern (12) durch einen ersten kreissegmentförmigen Abschnitt (15) eines ersten Mitnehmers (12) der beiden benachbarten Mitnehmer (12) und durch einen zweiten kreissegmentförmigen Abschnitt (16) eines zweiten Mitnehmers (12) der beiden benachbarten Mitnehmer (12) gebildet ist.

4. Transportvorrichtung (10) nach Anspruch 2 oder 3,
wobei der taschenförmige und vorzugsweise sterntaschenförmige Aufnahmebereich (14) - zumindest teil- oder bereichsweise - derart flexibel ausgeführt ist, dass in dem taschenförmigen und vorzugsweise sterntaschenförmigen Aufnahmebereich (14) Spülgutteile (100) und insbesondere Trinkgefäße unterschiedlicher Größe und insbesondere mit unterschiedlichem Durchmesser und/oder Spülgutteile (100) und insbesondere Trinkgefäße mit unterschiedlicher Außengeometrie zumindest teil- oder bereichsweise aufnehmbar sind.

5. Transportvorrichtung (10) nach einem der Ansprüche 1 bis 4,
wobei die Halteelemente (12, 13) jeweils als im Hinblick auf die Förderrichtung des umlaufenden Fördersystems (11) radial von dem Fördersystem (11) abstehende und zumindest bereichs- oder abschnittsweise vertikal mit dem umlaufenden Fördersystem (11) transportierte Aufnahmefinger oder Aufnahmestifte (13) ausgebildet sind, wobei jeder Aufnahmefinger oder Aufnahmestift (13) insbesondere ausgebildet ist, ein kopfüber ausgerichtetes Trinkgefäß zumindest teil-oder bereichsweise aufzunehmen.

6. Transportvorrichtung (10) nach einem der Ansprüche 1 bis 5,
wobei die wenigstens eine Führungsschiene oder das wenigstens eine Führungsband derart ausgeführt ist, dass beim Transport der von den Halteelementen (12, 13) aufgenommenen Trinkgefäße in einem vorgegebenen oder vorgebbaren Bereich oder Abschnitt der Spülmaschine (1) die von den Halteelementen (12, 13) aufgenommenen Trinkgefäße um die parallel zum Fördersystem (11) verlaufende Achse verschwenkt werden.

7. Transportvorrichtung (10) nach einem der Ansprüche 1 bis 6,
wobei mindestens eine Führung (19) seitlich der Halteelemente (12, 13) verläuft und zum insbesondere seitlichen Führen der von den Halteelementen (12, 13) aufgenommen oder gehaltenen Spülgutteile (100), insbesondere Trinkgefäße, dient.

8. Transportvorrichtung (10) nach einem der Ansprüche 1 bis 7,
wobei das umlaufende Fördersystem (11) ausgebildet ist, die mit dem Fördersystem (11) verbundenen Halteelemente (12, 13) mit den von den Halteelementen (12, 13) aufgenommenen oder gehaltenen Spülgutteilen (100), insbesondere Trinkgefäßen, zu der Spülmaschine (1) und/oder durch verschiedene Bereiche oder Abschnitte der Spülmaschine (1) zu transportieren, wobei hierzu das Fördersystem (11) mit einem entsprechenden Antrieb (20), insbesondere elektromotorischen Antrieb (20), wirkverbunden oder wirkverbindbar ist, wobei das Fördersystem (11) - in einer Draufsicht gesehen - insbesondere mäanderförmig oder stadiumförmig verläuft.

9. Spülmaschine (1) insbesondere für einen Coffeeshop und/oder für ein Schnellrestaurant zum Reinigen von Spülgut (100) insbesondere und vorzugsweise ausschließlich von von dem Coffeeshop und/oder von dem Schnellrestaurant ausgegebenen Spülgut (100), wobei der Spülmaschine (1) ein insbesondere als Rücknahme-Einrichtung und vorzugsweise als Rücknahme-Automat für Mehrweg-Spülgutteile (100) ausgebildeter Eingabe- oder Einstellbereich (2) zugeordnet ist, und wobei die Spülmaschine (1) eine Transportvorrichtung (10) nach einem der Ansprüche 1 bis 8 aufweist zum Transportieren des Spülguts (100) von dem Eingabe- oder Einstellbereich (2) zu einem Behandlungsbereich (3, 6, 7) der Spülmaschine (1) und von dort zu einem Ausgabe- oder Entnahmebereich (4) der Spülmaschine (1), wobei der Behandlungsbereich (3, 6, 7) der Spülmaschine (1) ein Wasch- und Klarspülsystem (6) zum Waschen und Klarspülen des Spülguts (100) und ggf. ein - in Transportrichtung des Spülguts (100) gesehen - nachgeschaltetes Trocknungssystem (7) zum Trocknen des klargespülten Spülguts (100) aufweist.

10. Spülmaschine (1) nach Anspruch 9,
wobei die Spülmaschine (1) eine Transportvorrichtung (10) nach Anspruch 6 aufweist, und wobei die mindestens eine Führung eine erste Führungsschiene oder ein erstes Führungsband (17) und wenigstens eine zweite Führungsschiene oder wenigstens ein zweites Führungsband (18) aufweist, wobei die erste Führungsschiene bzw. das erste Führungsband (17) und die wenigstens eine zweite Führungsschiene bzw. das wenigstens eine zweite Führungsband (18) zumindest bereichsweise parallel und in einer gemeinsamen, sich parallel zum Fördersystem (11) erstreckenden, insbesondere horizontalen Ebene verlaufen, wobei in dem vorgegebenen oder vorgebbaren Bereich oder Abschnitt der Spülmaschine (1) die wenigstens eine zweite Führungsschiene bzw. das wenigstens eine zweite Führungsband (18) parallel zu der ersten Führungsschiene bzw. zu dem ersten Führungsband (17), jedoch in einer sich parallel zum Fördersystem (11) erstreckenden, insbesondere horizontalen Ebene verläuft, die verschieden von der sich parallel zum Fördersystem (11) erstreckenden, insbesondere horizontalen Ebene ist, in welcher sich die erste Führungsschiene bzw. das erste Führungsband (17) in dem vorgegebenen oder vorgebbaren Bereich oder Abschnitt der Spülmaschine (1) erstreckt.

11. Spülmaschine (1) nach Anspruch 9,
wobei die Spülmaschine (1) eine Transportvorrichtung (10) nach Anspruch 8 aufweist, und ferner umfassend eine Steuereinrichtung, welche dem Antrieb (20) des Fördersystems (11) zugeordnet und ausgebildet ist, den Antrieb (20) insbesondere bedarfsweise anzusteuern, wobei die Steuereinrichtung ausgebildet ist:
(a) insbesondere bedarfsweise, automatisch oder wahlweise automatisch den Antrieb (20) derart anzusteuern, dass mit dem Fördersystem (11) die Halteelemente (12, 13) kontinuierlich mit einer konstanten Transportgeschwindigkeit oder mit einer variierenden Transportgeschwindigkeit durch die Bereiche oder Abschnitte der Spülmaschine (1) transportiert werden; oder
(b) insbesondere bedarfsweise, automatisch oder wahlweise automatisch den Antrieb (20) derart anzusteuern, dass mit dem Fördersystem (11) die Halteelemente (12, 13) diskontinuierlich und insbesondere schrittförmig durch die Bereiche oder Abschnitte der Spülmaschine (1) transportiert werden, wobei der diskontinuierliche Transport vorzugsweise derart gewählt ist, dass insbesondere sensorgesteuert das Fördersystem (11) immer dann die Halteelemente (12, 13) um eine insbesondere vorab festgelegte oder festlegbare Wegstrecke weitertransportieren, wenn in dem Beladebereich der Spülmaschine (1) mindestens ein Spülgutteil (100), insbesondere Trinkgefäß, von dem mindestens einen Halteelement (12, 13) aufgenommen ist.

12. Spülmaschine (1) nach Anspruch 11,
wobei die verschiedenen Bereiche oder Abschnitte der Spülmaschine (1) insbesondere Folgendes umfassen:
- einen Beladebereich (2) der Spülmaschine (1), in welchem die zu reinigenden Spülgutteile (100), insbesondere Trinkgefäße, vorzugsweise kopfüber ausgerichtet insbesondere manuell und insbesondere zumindest bereichs- oder teilweise formschlüssig mit mindestens einem Halteelement (12, 13) der Transportvorrichtung (10) lösbar verbindbar sind;
- einen Behandlungsbereich (3, 6, 7) der Spülmaschine (1), in welchem die von den Halteelementen (12, 13) aufgenommenen oder gehaltenen Spülgutteile (100), insbesondere Trinkgefäße, behandelbar sind, insbesondere wasch- und klarspülbar und ggf. trockenbar sind;
- ggf. einen zwischen dem Beladebereich (2) und dem Behandlungsbereich (3, 6, 7) vorgesehenen Zuführungsbereich der Spülmaschine (1), in welchem die in dem Beladebereich (2) aufgenommenen Spülgutteile (100), insbesondere Trinkgefäße, dem Behandlungsbereich (3, 6, 7) zugeführt werden;
- einen Entladebereich (4) der Spülmaschine (1), in welchem die von den Halteelementen (12, 13) aufgenommenen oder gehaltenen Spülgutteile (100), insbesondere Trinkgefäße, nach deren Behandlung in dem Behandlungsbereich (3, 6, 7) der Spülmaschine (1) von der Spülmaschine (1) ausgebbar oder abstapelbar sind; und
- einen Rückführungsbereich (5) der Spülmaschine (1), in welchem die Halteelemente (12, 13) mit Hilfe des Fördersystems (11) von dem Entladebereich (4) der Spülmaschine (1) wieder zurück zu dem Beladebereich (2) der Spülmaschine (1) transportiert werden.

## Claims

1. A transport apparatus (10) for a dishwasher (1), in particular for a dishwasher (1) of a coffee shop and/or a fast-food restaurant, for transporting dishes to be cleaned (100), in particular drinking containers, through at least one treatment zone of the dishwasher (1) and/or for feeding dishes to be cleaned (100), in particular drinking containers, to the dishwasher (1), wherein the transport apparatus (10) comprises:
- a circulating conveyor system (11), in particular in the form of a circulating transport chain or in the form of a circulating conveyor belt;
- a plurality of retaining elements (12, 13) connected to the circulating conveyor system (11) and configured in order to releasably receive and/or releasably retain dishes (100) to be washed, in particular drinking containers, in particular in a positively locking manner and preferably at least in a regionally or partially positively locking manner; and
- a support system (17, 18, 19) for at least partially and/or regionally supporting the dishes (100) received by the retaining elements (12, 13), in particular drinking containers.
wherein the retaining elements (12, 13) are respectively configured as pusher dogs (12) that radially protrude from the conveyor system (11) with respect to the conveying direction of the circulating conveyor system (11) and are at least regionally or portionally horizontally transported with the circulating conveyor system (11), wherein each pusher dog (12) comprises a pocket-shaped and preferably star-pocket-shaped receiving region (14), in which a dish (100), in particular drinking containers, is at least partially or regionally receivable, or wherein the retaining elements (12, 13) are respectively configured as pusher dogs (12) that radially protrude from the conveyor system (11) with respect to the conveying direction of the circulating conveyor system (11) and are at least regionally or portionally horizontally transported with the circulating conveyor system (11), wherein a pocket-shaped and preferably star-pocket-shaped receiving region (14) is formed or can be formed between two adjacent pusher dogs (12), in which a dish (100), in particular drinking container, is at least partially regionally receivable, wherein the pocket-shaped and preferably star pocket-shaped receiving region (14) is formed between two adjacent pusher dogs (12),
wherein the support system (17, 18, 19) comprises at least one guide extending at least regionally parallel to the conveyor system (11) and/or at least one guide running at least regionally parallel to the conveyor system (11) and in particular running concurrently with the conveyor system (11),
and **characterized in that**:
the at least one guide runs below the retaining elements (12, 13) and serves to vertically support the dishes (100), in particular drinking containers, received or retained by the retaining elements (12, 13),
wherein preferably the at least one guide comprises at least one guide rail extending at least regionally parallel to the conveyor system (11) or at least one guide belt extending at least regionally parallel to the conveyor system (11), or wherein the at least one guide comprises at least one guide rail running at least regionally parallel to the conveyor system (11) and in particular running concurrently with the conveyor system (11) or at least one guide belt running at least regionally parallel to the conveyor system (11) and in particular running concurrently with the conveyor system (11), and wherein the retaining element (12, 13) is thus designed so that the drinking containers to be cleaned are able to be received upside down, wherein the drinking containers in a state of having been received by one of the the retaining elements (12, 13) are pivotably mounted around an axis running parallel to the conveyor system (11) relative to the conveyor system (11) and/or relative to the retaining elements (12,13).

2. The transport apparatus (10) according to claim 1, wherein the pocket-shaped and preferably star pocket-shaped receiving region (14) is formed by at least one circular segment-shaped section (15, 16) of the pusher dog (12).

3. The transport apparatus (10) according to claim 1, wherein the pocket-shaped and preferably star pocket-shaped receiving region (14) between two adjacent pusher dogs (12) is formed by a first circular segment-shaped section (15) of a first pusher dog (12) of the two adjacent pusher dogs (12) and by a second circular segment-shaped section (16) of a second pusher dog (12) of the two adjacent pusher dogs (12).

4. The transport apparatus (10) according to claim 2 or 3, wherein the pocket-shaped and preferably star pocket-shaped receiving region (14) is designed at least partially or regionally in order to be flexible in such a way that, in the pocket-shaped and preferably star pocket-shaped receiving region (14), dishes (100) and in particular drinking containers of different sizes and in particular of different diameters and/or dishes (100) and in particular drinking containers having a different outer geometry are at least partially or regionally receivable.

5. The transport apparatus (10) according to any of the claims 1 through 4, wherein the retaining elements (12, 13) are respectively configured as receiving fingers or receiving pins (13) that project radially from the conveyor system (11) with respect to the conveying direction of the circulating conveyor system (11) and are at least regionally or portionally vertically transported with the circulating conveyor system (11), wherein each receiving finger or receiving pin (13) is configured in particular in order to at least partially or regionally receive an upside-down oriented drinking container.

6. The transport apparatus (10) according to any of the claims 1 through 5, wherein the at least one guide rail or the at least one guide belt is configured such that, when transporting the drinking containers received by the retaining elements (12, 13) in a predefined or pre-definable region or portion of the dishwasher (1), the drinking containers received by the retaining elements (12, 13) are pivoted about the axis running parallel to the conveyor system (11).

7. The transport apparatus (10) according to any of the claims 1 through 6, wherein at least one guide (19) runs laterally to the retaining elements (12, 13) and serves to in particular laterally guide the dishes (100), in particular drinking containers, received or retained by the retaining elements (12, 13).

8. The transport apparatus (10) according to any of the claims 1 through 7, wherein the circulating conveyor system (11) is configured in order to transport the retaining elements (12, 13) connected to the conveyor system (11) with any dishes (100), in particular drinking containers, received or retained by the retaining elements (12, 13) to the dishwasher (1) and/or through different regions or portions of the dishwasher (1), wherein, for this purpose, the conveyor system (11) is operatively connected or operatively connectable to a corresponding drive (20), in particular an electromotive drive (20), wherein the conveyor system (11) when viewed from above is in particular meander-shaped or stadium-shaped.

9. A dishwasher (1), in particular for a coffee shop and/or for a fast-food restaurant, for the washing of dishes (100), in particular and preferably exclusively dishes provided by the coffee shop and/or fast-food restaurant (100), wherein the dishwasher (1) is associated with an input or insertion region (2) configured in particular as a return device and preferably as a return machine for reusable dishes (100), and wherein the dishwasher (1) comprises a transport device (10) according to any one of claims 1 to 8 for transporting the dishes (100) from the input or insertion region (2) to a treatment region (3, 6, 7) of the dishwasher (1) and from there to an output or removal region (4) of the dishwasher (1), wherein the treatment region (3, 6, 7) of the dishwasher (1) comprises a washing and rinsing system (6) for washing and rinsing the dishes (100) and, if necessary, a drying system (7) for drying the rinsed dish (100), said drying system being located downstream when viewed in the transport direction of the dish (100).

10. A dishwasher (1) according to claim 9, wherein the dishwasher (1) comprises a transport apparatus (10) according to claim 6, and wherein the at least one guide comprises a first guide rail or a first guide belt (17) and at least one second guide rail or at least one second guide belt (18), wherein the first guide rail or the first guide belt (17) and the at least one second guide rail or the at least one second guide belt (18) run at least regionally parallel and on a common, in particular horizontal, plane extending parallel to the conveyor system (11), wherein, in the predefined or pre-definable region or portion of the dishwasher (1), the at least one second guide rail or the at least one second guide belt (18) runs parallel to the first guide rail or to the first guide belt (17), however on an in particular horizontal plane extending parallel to the conveyor system (11), in particular horizontal plane that is different from the particular horizontal plane that runs parallel to the conveyor system (11), in which the first guide rail or the first guide belt (17) extends in the predefined or pre-definable region or portion of the dishwasher (1).

11. A dishwasher (1) according to claim 9, wherein the dishwasher (1) comprises a transport apparatus (10) according to claim 8, and further comprising a control device associated with the drive (20) of the conveyor system (11) and configured to actuate the drive (20) in particular as needed, wherein the control device is configured to:
(a) in particular as needed, automatically or optionally automatically, actuate the drive (20) such that the retaining elements (12, 13) are continuously transported with the conveyor system (11) at a constant transport speed or at a varying transport speed through the regions or portions of the dishwasher (1); or
(b) in particular as needed, automatically or optionally automatically, actuate the drive (20) such that the retaining elements (12, 13) are transported with the conveyor system (11) discontinuously and in particular in a stepwise manner through the regions or portions of the dishwasher (1), wherein the discontinuous transport is preferably selected such that, in particular in a sensor-controlled manner, the conveyor system (11) always transports the retaining elements (12, 13) further by an in particular predefined or definable distance when at least one dish (100), in particular a drinking container, is received in the loading region of the dishwasher (1) by the at least one retaining element (12, 13).

12. A dishwasher according to claim 11, wherein the various regions or portions of the dishwasher (1) comprise the following, in particular:
- a loading region (2) of the dishwasher (1), in which the dishes (100), in particular drinking containers, to be washed are releasably connectable to at least one retaining element (12, 13) of the transport apparatus (10), preferably aligned upside-down, in particular manually and in particular at least regionally or partially in a positively locking manner;
- a treatment region (3, 6, 7) of the dishwasher (1), in which the dishes (100) received or retained by the retaining elements (12, 13), in particular drinking containers, are treatable, in particular washable and rinsable and, if necessary, dryable;
- if applicable, a feeding section provided between the loading region (2) and the treatment region (3, 6, 7) of the dishwasher (1), in which the dishes (100) received in the loading area (2), in particular drinking containers, are supplied to the treatment region (3, 6, 7);
- an unloading region (4) of the dishwasher (1), in which the dishes (100) received or retained by the retaining elements (12, 13), in particular drinking containers, can be discharged or unstacked from the dishwasher (1) after their treatment in the treatment region (3, 6, 7) of the dishwasher (1); and
- a return region (5) of the dishwasher (1) in which the retaining elements (12, 13) are transported from the unloading region (4) of the dishwasher (1) back to the loading region (2) of the dishwasher (1) with the aid of the conveyor system (11).

## Revendications

1. Appareil de transport (10) pour un lave-vaisselle (1), en particulier pour un lave-vaisselle (1) d'un café et/ou d'un restaurant rapide, permettant de transporter des articles de vaisselle à nettoyer (100), notamment des contenants de boisson, à travers au moins une zone de traitement du lave-vaisselle (1) et/ou d'approvisionner des articles de vaisselle à nettoyer (100), en particulier des contenants de boisson, vers le lave-vaisselle (1), dans lequel l'appareil de transport (10) comprend :
- un système convoyeur en boucle fermée (11), en particulier sous la forme d'une chaîne de transport à boucle fermée ou sous la forme d'une bande transporteuse en boucle fermée ;
- une pluralité d'éléments de retenue (12, 13) reliés au système convoyeur en boucle fermée (11) et configurés pour recevoir de manière libérable et/ou retenir de manière libérable des articles de vaisselle (100) à laver, en particulier des contenants de boisson, en particulier par liaison de forme et de préférence au moins partiellement ou localement par liaison de forme ; et
- un système de support (17, 18, 19) pour supporter au moins partiellement et/ou localement les articles de vaisselle (100) reçus par les éléments de retenue (12, 13), en particulier des contenants de boisson.
dans lequel les éléments de retenue (12, 13) sont respectivement configurés comme des taquets de poussée (12) qui font saillie radialement depuis le système convoyeur (11) par rapport au sens de convoyage du système convoyeur en boucle fermée (11) et sont transportés au moins localement, ou horizontalement par portions, avec le système convoyeur en boucle fermée (11), dans lequel chaque taquet de poussée (12) comprend une région de réception (14) en forme de poche et de préférence en forme de poche en étoile, dans laquelle un article de vaisselle (100), en particulier des contenants de boisson, est recevable au moins partiellement ou localement, ou dans lequel les éléments de retenue (12, 13) sont respectivement configurés comme des taquets de poussée (12) qui font saillie radialement depuis le système convoyeur (11) par rapport au sens de convoyage du système convoyeur en boucle fermée (11) et sont transportés au moins localement, ou horizontalement par portions, avec le système convoyeur en boucle fermée (11), dans lequel une région de réception (14) en forme de poche et de préférence en forme de poche en étoile est formée ou peut être formée entre deux taquets de poussée (12) adjacents, dans lequel un article de vaisselle (100), en particulier un contenant de boisson, est recevable au moins partiellement localement, dans lequel la région de réception (14) en forme de poche et de préférence en forme de poche en étoile est formée entre deux taquets de poussée (12) adjacents, dans lequel le système de support (17, 18, 19) comprend au moins un guide s'étendant au moins localement parallèlement au système convoyeur (11) et/ou au moins un guide s'étendant au moins localement parallèlement au système convoyeur (11) et en particulier s'étendant de manière concourante avec le système convoyeur (11),
et **caractérisé en ce que** :
l'au moins un guide passe sous les éléments de retenue (12, 13) et sert à supporter verticalement les articles de vaisselle (100), en particulier des contenants de boisson, reçus ou retenus par les éléments de retenue (12, 13), dans lequel de préférence l'au moins un guide comprend au moins un rail de guidage s'étendant au moins localement parallèlement au système convoyeur (11) ou au moins une courroie de guidage s'étendant au moins localement parallèlement au système convoyeur (11), ou dans lequel l'au moins un guide comprend au moins un rail de guidage s'étendant au moins localement parallèlement au système convoyeur (11) et s'étendant en particulier de manière concourante avec le système convoyeur (11) ou au moins une courroie de guidage s'étendant au moins localement parallèlement au système convoyeur (11) et s'étendant en particulier de manière concourante avec le système convoyeur (11), et dans lequel l'élément de retenue (12, 13) est ainsi conçu pour que les contenants de boisson à nettoyer puissent être reçus à l'envers, dans lequel les contenants de boisson dans un état où ils ont été reçus par l'un des éléments de retenue (12, 13) sont montés de manière pivotante autour d'un axe parallèle au système convoyeur (11) par rapport au système convoyeur (11) et/ou par rapport aux éléments de retenue (12,13).

2. Appareil de transport (10) selon la revendication 1, dans lequel la région de réception (14) en forme de poche et de préférence en forme de poche en étoile est formée par au moins une section (15, 16) en forme de segment circulaire du taquet de poussée (12).

3. Appareil de transport (10) selon la revendication 1, dans lequel la région de réception (14) en forme de poche et de préférence en forme de poche en étoile entre deux taquets de poussée (12) adjacents est formée par une première section (15) en forme de segment circulaire d'un premier taquet de poussée (12) des deux taquets de poussée (12) adjacents et par une deuxième section (16) en forme de segment circulaire d'un deuxième taquet de poussée (12) des deux taquets de poussée (12) adjacents.

4. Appareil de transport (10) selon la revendication 2 ou 3, dans lequel la région de réception (14) en forme de poche et de préférence en forme de poche en étoile est conçue au moins partiellement ou localement pour être flexible de telle sorte que, dans la région de réception en forme de poche et de préférence en forme de poche en étoile (14), des articles de vaisselle (100) et en particulier des contenants de boisson de différentes tailles et en particulier de différents diamètres et/ou des articles de vaisselle (100) et en particulier des contenants de boisson de géométrie extérieure différente peuvent être reçus au moins partiellement ou localement.

5. Appareil de transport (10) selon l'une quelconque des revendications 1 à 4, dans lequel les éléments de retenue (12, 13) sont respectivement configurés comme des doigts de réception ou des broches de réception (13) qui font saillie radialement depuis le système convoyeur (11) par rapport au sens de convoyage du système convoyeur en boucle fermée (11) et sont transportés au moins localement ou par portions verticalement avec le système convoyeur en boucle fermée (11), dans lequel chaque doigt de réception ou broche de réception (13) sont configurés en particulier pour recevoir au moins partiellement ou localement un contenant de boisson orienté à l'envers.

6. Dispositif de transport (10) selon l'une quelconque des revendications 1 à 5, dans lequel l'au moins un rail de guidage ou l'au moins une courroie de guidage sont configurés de telle sorte que, lors du transport des contenants de boisson reçus par les éléments de retenue (12, 13) dans une région ou portion prédéfinissable du lave-vaisselle (1), on fait pivoter les contenants de boisson reçus par les éléments de retenue (12, 13) autour de l'axe s'étendant parallèlement au système convoyeur (11).

7. Dispositif de transport (10) selon l'une quelconque des revendications 1 à 6, dans lequel au moins un guide (19) s'étend latéralement par rapport aux éléments de retenue (12, 13) et sert en particulier à guider latéralement les articles de vaisselle (100), en particulier les contenants de boisson, reçus ou retenus par les éléments de retenue (12, 13).

8. Appareil de transport (10) selon l'une quelconque des revendications 1 à 7, dans lequel le système convoyeur en boucle fermée (11) est configuré afin de transporter les éléments de retenue (12, 13) reliés au système convoyeur (11) avec de quelconques articles de vaisselle (100), en particulier des contenants de boisson, reçus ou retenus par les éléments de retenue (12, 13) vers le lave-vaisselle (1) et/ou à travers différentes régions ou portions du lave-vaisselle (1), dans lequel, à cet effet, le système convoyeur (11) est relié de manière fonctionnelle ou peut être relié de manière fonctionnelle à un entraînement correspondant (20), en particulier un entraînement électromoteur (20), dans lequel le système transporteur (11) est en particulier en forme de méandres ou de stade lorsqu'il est vu de dessus.

9. Lave-vaisselle (1), en particulier pour un café et/ou pour un restaurant rapide, pour le lavage d'articles de vaisselle (100), en particulier et de préférence exclusivement des articles de vaisselle fournis par le café et/ou le restaurant rapide (100), dans lequel le lave-vaisselle (1) est associé à une région d'entrée ou d'insertion (2) configurée en particulier en tant que dispositif de retour et de préférence en tant que machine de retour pour articles de vaisselle réutilisables (100), et dans lequel le lave-vaisselle (1) comprend un dispositif de transport (10) selon l'une quelconque des revendications 1 à 8 pour transporter les articles de vaisselle (100) depuis la région d'entrée ou d'insertion (2) vers une région de traitement (3, 6, 7) du lave-vaisselle (1) et de là jusqu'à une région de sortie ou d'évacuation (4) du lave-vaisselle (1), dans lequel la région de traitement (3, 6, 7) du lave-vaisselle (1) comprend un système de lavage et de rinçage (6) pour laver et rincer les articles de vaisselle (100) et, si nécessaire, un système de séchage (7) pour sécher l'article de vaisselle rincé (100), ledit système de séchage étant situé en aval lorsqu'il est vu dans le sens de transport de l'article de vaisselle (100).

10. Lave-vaisselle (1) selon la revendication 9, dans lequel le lave-vaisselle (1) comprend un appareil de transport (10) selon la revendication 6, et dans lequel l'au moins un guide comprend un premier rail de guidage ou une première courroie de guidage (17) et au moins un deuxième rail de guidage ou au moins une deuxième courroie de guidage (18), dans lequel le premier rail de guidage ou la première courroie de guidage (17) et l'au moins un deuxième rail de guidage ou l'au moins une deuxième courroie de guidage (18) s'étendent au moins localement parallèlement et sur un plan commun, en particulier horizontal, s'étendant parallèlement au système convoyeur (11), dans lequel, dans la région ou portion prédéfinie ou prédéfinissable du lave-vaisselle (1), l'au moins un deuxième rail de guidage ou l'au moins une deuxième courroie de guidage (18) s'étend parallèlement au premier rail de guidage ou à la première courroie de guidage (17), cependant, sur un plan notamment horizontal s'étendant parallèlement au système convoyeur (11), en particulier un plan horizontal qui est différent du plan horizontal particulier qui s'étend parallèlement au système convoyeur (11), dans lequel le premier rail de guidage ou la première courroie de guidage (17) s'étend dans la région ou portion prédéfinie ou prédéfinissable du lave-vaisselle (1).

11. Lave-vaisselle (1) selon la revendication 9, dans lequel le lave-vaisselle (1) comprend un appareil de transport (10) selon la revendication 8, et comprenant en outre un dispositif de commande associé à l'entraînement (20) du système convoyeur (11) et configuré pour actionner l'entraînement (20) en particulier selon les besoins, dans lequel le dispositif de commande est configuré pour :
(a)en particulier selon les besoins, automatiquement ou facultativement automatiquement, actionner l'entraînement (20) de telle sorte que les éléments de retenue (12, 13) sont transportés en continu avec le système convoyeur (11) à une vitesse de transport constante ou à une vitesse de transport variable à travers les régions ou portions du lave-vaisselle (1) ; ou
(b)en particulier selon les besoins, automatiquement ou facultativement automatiquement, actionner l'entraînement (20) de telle sorte que les éléments de retenue (12, 13) sont transportés avec le système convoyeur (11) de manière discontinue et en particulier pas à pas à travers les régions ou portions du lave-vaisselle (1), dans lequel le transport discontinu est de préférence choisi de telle sorte que, en particulier de manière commandée par capteur, le système transporteur (11) transporte toujours les éléments de retenue (12, 13) plus loin d'une distance prédéfinie ou définissable en particulier, lorsqu'au moins un article de vaisselle (100), en particulier un contenant de boisson, est reçu dans la région de chargement du lave-vaisselle (1) par l'au moins un élément de retenue (12, 13).

12. Lave-vaisselle selon la revendication 11, dans lequel les diverses régions ou portions du lave-vaisselle (1) comprennent ce qui suit, en particulier :
- une région de chargement (2) du lave-vaisselle (1), dans laquelle les articles de vaisselle (100), en particulier les contenants de boisson, peuvent être reliés de manière libérable à au moins un élément de retenue (12, 13) de l'appareil de transport (10), de préférence orientés à l'envers, en particulier manuellement et en particulier au moins localement ou partiellement par liaison de forme ;
- une région de traitement (3, 6, 7) du lave-vaisselle (1), dans laquelle les articles de vaisselle (100) reçus ou retenus par les éléments de retenue (12, 13), en particulier les contenants de boisson, peuvent être traités, en particulier lavés et rincés et, si nécessaire, séchés ;
- le cas échéant, une section d'approvisionnement prévue entre la région de chargement (2) et la région de traitement (3, 6, 7) du
lave-vaisselle (1), dans laquelle les articles de vaisselle (100) reçus dans la région de chargement (2), en particulier les contenants de boisson, est amenée vers la région de traitement (3, 6, 7).
- une région de déchargement (4) du lave-vaisselle (1), dans laquelle les articles de vaisselle (100) reçus ou retenus par les éléments de retenue (12, 13), en particulier les contenants de boisson, peuvent être déchargés ou désempilés du lave-vaisselle (1) après leur traitement dans la région de traitement (3, 6, 7) du lave-vaisselle (1) ; et
- une région de retour (5) du lave-vaisselle (1) dans laquelle les éléments de retenue (12, 13) sont transportés depuis la région de déchargement (4) du lave-vaisselle (1) en retour vers la région de chargement (2) du lave-vaisselle (1) à l'aide du système convoyeur (11).
